(19) **Europäisches Patentamt**
**European Patent Office**
**Office européen des brevets**

(11) **EP 4 026 813 B1**

(12) **EUROPÄISCHE PATENTSCHRIFT**

(45) Veröffentlichungstag und Bekanntmachung des Hinweises auf die Patenterteilung:
**25.06.2025 Patentblatt 2025/26**

(51) Internationale Patentklassifikation (IPC):
**C03C 3/087** (2006.01)   **C03C 3/097** (2006.01)
**C03C 10/00** (2006.01)

(21) Anmeldenummer: **22159057.3**

(22) Anmeldetag: **18.02.2021**

(52) Gemeinsame Patentklassifikation (CPC):
**C03C 10/0027; C03C 3/087; C03C 3/097**

(54) **KOCHFLÄCHE AUS EINER LAS-GLASKERAMIKPLATTE**

COOKING SURFACE MADE OF AN LAS GLASS CERAMIC PLATE

SURFACE DE CUISSON EN UNE PLAQUE VITROCÉRAMIQUE LA

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2020 DE 102020202597**

(43) Veröffentlichungstag der Anmeldung:
**13.07.2022 Patentblatt 2022/28**

(62) Dokumentnummer(n) der früheren Anmeldung(en) nach Art. 76 EPÜ:
**21157920.6 / 3 872 042**

(73) Patentinhaber: **SCHOTT AG**
**55122 Mainz (DE)**

(72) Erfinder:
• **WEISS, Evelin**
**55131 Mainz (DE)**
• **SIEBERS, Friedrich**
**55283 55283 Nierstein (DE)**
• **ZENKER, Thomas**
**55268 Nieder-Olm (DE)**
• **SPIER, Martin**
**55457 Horrweiler (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
EP-A1- 1 837 313      EP-A1- 1 837 314
EP-A1- 2 883 846      EP-A1- 3 018 107
DE-A1- 102012 202 697   DE-B3- 102016 208 300

**Beschreibung**

Die Erfindung betrifft eine Kochfläche aus einer Lithiumaluminiumsilikat-Glaskeramikplatte mit hoher Transparenz, die eine Oberseitenfläche und eine Unterseitenfläche aufweist, wobei die Unterseitenfläche mindestens teilweise mit einer Unterseitenbeschichtung versehen ist.

Der Begriff Kochfläche bezeichnet im Unterschied zum Kochfeld die für den Kochvorgang vorgesehene Glaskeramikplatte. Das Kochfeld umfasst neben der Kochfläche die Heizeinrichtung sowie Bedienungs- und Anzeigemittel.

Bei einigen etablierten Anwendungen von Glaskeramiken finden zunehmend hitzebeständige Spezialgläser, wie Alumino- oder Borosilikatgläser Verwendung. Durch technische Zusatzmaßnahmen wie eine Luftkühlung bei Kaminscheiben oder elektronische Temperaturbegrenzung bei induktionsbeheizten Kochflächen können die Einsatztemperaturen erniedrigt und fallweise ein Einsatz für diese Spezialgläser ermöglicht werden.

Diese Spezialgläser werden beispielsweise in folgenden Schriften WO 2018/225627 A, EP 3 228 601 A1, WO 2015/009483 A1 beschrieben.

Alternative Lösungen mit Borosilikatgläsern, die zwar eine hohe Farbneutralität aufweisen, besitzen nur eine geringe thermische Belastbarkeit, sodass diese Gläser bezüglich ihres Einsatzbereiches deutliche Nachteile gegenüber Kochflächen mit Glaskeramikplatten aufweisen. Darüber hinaus weisen Borosilikatgläser im Wellenlängenbereich > 3300 nm nur eine geringe Transmission auf, was für den Einsatz von optischen Temperatursensoren in Kochfeldern von Nachteil ist.

Gegenüber diesen Gläsern stellt die Farbe von transparenten Glaskeramiken einen wesentlichen Nachteil dar. Es besteht daher ein Bedarf, transparente Glaskeramiken mit geringer Farbe zu entwickeln.

Die Ansätze, den für die Farbkomplexe in Glaskeramiken mit verantwortlichen Keimbildner $TiO_2$ zu vermeiden (WO 2008/065167 A1, US 3,252,811) oder zu begrenzen (WO 2008/065166 A1) haben bisher nicht zu einer technischen Umsetzung geführt. Die erforderlichen höheren Gehalte der alternativen Keimbildner $ZrO_2$ und/oder $SnO_2$ führen zu Nachteilen bei der Schmelze und Formgebung, wie höhere Schmelz- und Formgebungstemperaturen sowie unzureichende Entglasungsfestigkeit bei der Formgebung.

Die DE 10 2010 035 544 A1 und die DE 10 2011 107 831 A1 offenbaren transparente Glaskeramiken mit einem Farbwert c* < 3. Die hohe Transparenz wird bei der DE 10 2010 035 544 A1 auf einen ZnO-Gehalt > 4% zurückgeführt, wobei die Lichttransmission > 88% beträgt. Die DE 10 2011 107 831 A1 führt die hohe Transparenz auf kleine Summenwerte für MgO + ZnO < 2,2 Gew.-% zurück. Nachteilig bei diesen Glaskeramiken ist, dass wieder höhere Gehalte der alternativen Keimbildner $ZrO_2$ und/oder $SnO_2$ erforderlich sind. Die geringen oder fehlenden Anteile des wirksamen Keimbildners $TiO_2$ sind nachteilig für hohe Keimbildungsraten und damit für die gewünschten kurzen Keramisierungszeiten. Weiter führen die hohen Gehalte der Keimbildner $ZrO_2$ und/oder $SnO_2$ zu Nachteilen bei der Schmelze und Formgebung. Das Einschmelzen der Rohstoffe für diese Komponenten benötigt längere Zeiten, was hinsichtlich des Wannendurchsatzes und der Energiebedarfs wirtschaftlich nachteilig ist.

Die Schrift WO 2013/124373 A1 beschreibt die physikalische Entfärbung von transparenten Glaskeramiken mit Hochquarz-Mischkristallen als Hauptkristallphase, die bis auf unvermeidliche Rohstoffverunreinigungen frei von Arsen und Antimon sind, durch Zusätze von 0,005 Gew.-% - 0,15 Gew.-% $Nd_2O_3$. Das Prinzip des physikalischen Entfärbens beruht darauf, dass die vorhandenen Absorptionsbanden durch komplementäre Absorptionsbanden des Entfärbemittels neutralisiert werden. Dies führt naturgemäß zu stärkerer Absorption des Lichts und erniedrigt damit die Helligkeit. Um günstige Fertigungsbedingungen, d.h. niedrige Schmelz- und niedrige Formgebungstemperaturen zu erreichen, enthalten die Beispielgläser dieser Schrift hohe Gehalte der viskositätsabsenkenden Komponente MgO von 0,44 Gew.-% bis 0,93 Gew.-%. Neben den hohen MgO-Gehalten sind die vergleichsweise hohen $SnO_2$-Gehalte der Beispielglaskeramiken für die Farbe c* nachteilig.

Induktionsbeheizte Kochflächen bestehend aus einer transparenten, eingefärbten Glaskeramikplatte werden in der Regel mit einer farbigen Unterseitenbeschichtung versehen. Für die Unterseitenbeschichtung werden zunehmend helle Farbtöne, insbesondere auch weiß, eingesetzt. Die bisherigen Glaskeramiken haben den Nachteil, dass sie den Farbton der Unterseitenbeschichtung zu gelblichen Farbtönen hin verschieben. Es findet eine unerwünschte Vergrößerung der Farbkomponente b des CIELAB-Systems statt.

Bei den transparenten, nicht eingefärbten Glaskeramiken werden bei der Herstellung keine färbenden Verbindungen zugegeben. Bei der anderen Klasse, den transparenten eingefärbten Glaskeramiken, wird zur Einfärbung im Volumen meist $V_2O_5$ zugesetzt, um die Helligkeit zu verringern und ein schwarzes Erscheinungsbild zu erreichen. Dies ist für Kochflächen mit schwarzem Erscheinungsbild typisch.

Bei den transparenten, nicht eingefärbten Glaskeramiken ist hohe Transparenz, das bedeutet hohe Helligkeit und eine geringe Farbe, gewünscht. Beides bedeutet geringe Absorption, da die Absorptionsbanden je nach Lage im visuell sichtbaren Spektrum sowohl die Helligkeit erniedrigen als auch die Farbe erhöhen, siehe EP 3 018 107, DE 10 2016 208300 oder EP 1 837 313.

Die EP 1 837 314 A1 offenbart eine transparente farblose LAS-Glaskeramik, die auf einer Seite mit einer ganzflächigen oder weitgehend ganzflächigen blickdichten, farbigen, temperaturstabilen Beschichtung versehen ist.

Auch bei dieser Zusammensetzung der Glaskeramik wird zum Überfärben Nd$_2$O$_3$ mit einem Gehalt von 0,01 Gew.-% bis 0,4 Gew.-% eingesetzt. Allerdings zeigt diese LAS-Glaskeramik einen leichten Grauton, der die Wahrnehmung der Farbe der Unterseitenbeschichtung ebenfalls beeinträchtigt.

Aufgabe der Erfindung ist es, eine Kochfläche aus einer TiO$_2$ aufweisenden LAS-Glaskeramikplatte anzugeben, bei der die Farbe der Unterseitenbeschichtung durch die Glaskeramikplatte von einem Betrachter nahezu unverfälscht wahrgenommen werden kann.

Unter unverfälscht wird eine Wahrnehmung durch das menschliche Auge verstanden, bei der ein Betrachter, d. h. ein farbmetrischer Normalbeobachter, keinen Unterschied in der Farbe der Unterseitenbeschichtung mit und ohne Glaskeramikplatte feststellt.

Der farbmetrische Normalbeobachter ist in CIE 1931 definiert.

Diese Aufgabe wird gemäß der sogenannten Remissionsvariante mit den Merkmalen des Anspruchs 1 gelöst.

Gemäß der sogenannten Transmissionsvariante, die nicht Teil der Erfindung ist, ist die Kochfläche dadurch gekennzeichnet, dass die Glaskeramikplatte als Hauptkristallphase Hochquarz-Mischkristalle enthält, dass die Glaskeramikplatte TiO$_2$ als Keimbildner enthält, und dass die Glaskeramikplatte nach Durchtritt von Licht der Normlichtart D65 bei 4 mm Dicke eine Helligkeit $L_T^*$ und eine Buntheit c* im CIELAB-Farbsystem aufweist, wobei die Helligkeit $L_T^*$ der folgenden Beziehung genügt:

$$L_T^* \geq a \cdot c_T^* + b \ \text{(Bedingung B1)}$$

mit a = 0,765, mit b ≥ 93,5 und mit $0 \leq c_T^* \leq 3$ .

Der Index T steht für Transmission.

Bevorzugte Werte sind a = 0,765 und b = 93,5. Ein bevorzugter Bereich für b ist 93,5 ≤ b ≤ 94,4.

Die Helligkeit oder Lichttransmission wird durch den $L_T^*$ Wert im CIELAB Farbsystem oder den Helligkeitswert Y (brightness) gemäß dem CIE-Normfarbsystem beschrieben. Das CIELAB Farbmodell ist in der DIN EN ISO 11664-4 "Colorimetry - Part 4: CIE 1976 L*a*b* Colour space" genormt. Die deutsche Umsetzung der internationalen CIE-Norm ist in der DIN 5033 festgelegt.

Die spektralphotometrischen Messungen erfolgen im Rahmen der Erfindung an beidseitig polierten Proben in einem Spektralbereich zwischen 380 und 780 nm. Aus den gemessenen spektralen Werten in dem Bereich, der das sichtbare Lichtspektrum repräsentiert, wird die Lichttransmission mit Wahl von Normlichtart und Beobachterwinkel für die vorliegende Dicke berechnet.

Es hat sich bei Glaskeramiken eingebürgert als Maß für die Farbe die Größe c* (Buntheit) aus dem CIELAB Farbsystem mit den Koordinaten L*, a*, b* heranzuziehen, gemäß der Berechnung:

$$c_T^* = \sqrt{\left(a^*\right)^2 + \left(b^*\right)^2}$$

Die Koordinaten des CIELAB Farbsystems lassen sich in bekannter Weise aus den Farbkoordinaten x, y und der Helligkeit Y* des CIE Farbsystems berechnen. Die Bestimmung des $c_T^*$ -Wertes der Proben erfolgt aus den durchgeführten spektralphotometrischen Messungen der Transmission mit den gewählten Parametern für Normlichtart und Beobachterwinkel.

Ein weiteres wesentliches Merkmal der LAS-Glaskeramiken ist die Streuung, die durch die Größe der Kristalle, deren Doppelbrechung und den Unterschied der Brechzahlen von Kristallen und Restglas bestimmt wird. Durch ausreichende Mengen der Keimbildner sowie ausreichende Keimbildungszeiten während der Keramisierung wird eine hohe Keimdichte erreicht, die dazu führt, dass die aufwachsenden Hochquarz-Mischkristalle mit ihrer Größe unterhalb des Bereiches der Wellenlänge des sichtbaren Lichtes liegen. Typischerweise liegt die mittlere Kristallitgröße der Hochquarz-Mischkristalle im Bereich von 20 nm bis 50 nm. Für eine geringe Streuung sind weiterhin geringe Doppelbrechung der Kristalle und eine gute Anpassung der Brechungsindizes von Kristallen und Restglasphase erforderlich. Diese Bedingungen für hohe Transparenz von LAS-Glaskeramiken sind dargestellt in dem Artikel "Nanophase Glass-Ceramics", Journal of the American Ceramic Society, Vol. 82, No. 1, pp. 5-16; 1999 von den Autoren Beall und Pickney.

Der Brechungsindex der Restglasphase wird durch ihre Zusammensetzung und die Abkühlrate bei der Keramisierung eingestellt.

Es ist eine geringe Streuung erwünscht, damit die Durchsicht auf die Unterseitenbeschichtung nicht verfälscht wird und die Anzeigen klar und deutlich sichtbar sind. Die Streuung der Glaskeramiken wird durch Messung der Trübung (engl. haze) bestimmt. Trübung ist nach ASTM D1003-13 der prozentuale Anteil durchgelassenen Lichts, der vom eingestrahlten Lichtbündel im Mittel um mehr als 2,5° abweicht.

Legt man das CIE- Farbsystem zu Grunde, gilt für die Helligkeit Y* folgende, der Bedingung 1 entsprechende Bedingung B1a:

$$Y^* \geq d \cdot c^* + e \text{ (Bedingung B1a)}$$

mit d = 1,83, mit e ≥ 84,4 und mit 0 ≤ c* ≤ 3.

Beide Farbsysteme lassen sich ineinander umrechnen. Im Folgenden wird die Erfindung nur auf der Basis des CIELAB-Systems beschrieben.

Vorzugsweise genügt die Helligkeit $L_T^*$ der folgenden Beziehung:

$$0{,}765 \cdot c^* + 94{,}4 \geq L_T^* \geq 0{,}765 \cdot c_T^* + 93{,}5 \text{ (Bedingung B2)}$$

Es hat sich herausgestellt, dass die Farbe der Unterseitenbeschichtung der Kochfläche bei TiO$_2$-haltigen Glaskeramiken unverfälscht wahrgenommen wird, wenn die Bedingung B1, insbesondere die Bedingung B2 eingehalten wird.

Mit dem Wert für die Buntheit $c_T^* \leq 3$ ist die Eigenfarbe der LAS-Glaskeramik bereits sehr gering. Es hat sich gezeigt, dass mit zunehmendem $c_T^*$-Wert und einer damit einhergehenden Zunahme der Eigenfarbe eine Kompensation der Eigenfarbe durch zunehmende Helligkeitswerte $L_T^*$ erfolgt, so dass die Farbe der Unterseitenbeschichtung unverfälscht wahrgenommen werden kann. Umgekehrt können mit abnehmendem $c_T^*$-Wert geringere Helligkeitswerte $L_T^*$ toleriert werden.

Wird die Bedingung B1 unterschritten, können die Werte c* und L* sich nicht mehr soweit kompensieren, dass das menschliche Auge die Verfälschung der Farbe der Unterseitenbeschichtung nicht mehr wahrnimmt.

Glaskeramiken ohne TiO$_2$ oder mit sehr geringen Gehalten an TiO$_2$, d. h. mit TiO$_2$-Gehalten unter 1,6 Gew.-%, weisen zwar geringe $c_T^*$ - und $L_T^*$-Werte auf, allerdings haben diese Glaskeramiken Nachteile bei den Fertigungseigenschaften, wie zum Beispiel höhere Schmelz- und Formgebungstemperaturen. Daher sind TiO$_2$-Anteile > 1,6 Gew.-% wünschenswert, um günstige Fertigungseigenschaften zu erzielen. Bevorzugt ist ein Korridor mit einer oberen Grenzgeraden einzuhalten, der durch die Bedingung B2 definiert wird.

Dieser Korridor zeigt den im Rahmen der Erfindung optimierten Bereich für (L*;c*) auf. Die untere Grenzgerade ist gegenüber anderen bekannten transparenten Glaskeramiken mit TiO$_2$ als Keimbildner vorteilhaft für die farblich unverfälschte visuelle Wahrnehmung der Unterseitenbeschichtung. Transparente LAS-Glaskeramiken ohne TiO$_2$ oder mit sehr geringen Gehalten können Werte über der oberen Grenzgeraden erreichen, haben jedoch die beschriebenen technischen und wirtschaftlichen Nachteile bei der Schmelze und Formgebung.

Gemäß der Remissionsvariante als Teil der Erfindung ist die Kochfläche dadurch gekennzeichnet, dass die Glaskeramikplatte mit einer Dicke von 4 mm bei Durchtritt von Licht der Normlichtart D65 eine Buntheit $c_T^*$ von höchstens 3 aufweist, dass die Glaskeramikplatte TiO$_2$ als Keimbildner aufweist, dass die Kochfläche einen Farbort A mit den Farbkoordinaten ( $L_R^*$, $a_R^*$, $b_R^*$ ) im CIELAB-Farbraum aufweist, der in Remission mit Licht der Normlichtart D65 gemessen wird, dass die Unterseitenbeschichtung einen Farbort B mit den Farbkoordinaten ( $L_{Rc}^*$, $a_{Rc}^*$, $b_{Rc}^*$ ) im CIELAB-Farbraum aufweist, dass die Farborte A und B einen Abstand $\Delta E_{Rc,R}^*$ aufweisen mit:

$$\Delta E_{Rc,R}^* = \sqrt{\left(L_{Rc}^* - L_R^*\right)^2 + \left(a_{Rc}^* - a_R^*\right)^2 + \left(b_{Rc}^* - b_R^*\right)^2}$$

und dass für den Abstand $\Delta E_{Rc,R}^*$ gilt:

$$0,07 \cdot L_R^* + 1,8 \leq \Delta E_{Rc,R}^* \leq 0,09 \cdot L_R^* + 3,4 \text{ (Bedingung B3)}$$

wobei die Farbkoordinate $L_R^*$ in % die Helligkeit der Kochfläche bezeichnet, die in Remission mit Licht der Normart D65 gemessen wird, mit

$$50\% \leq L_R^* \leq 100\% \text{ (Bedingung B4).}$$

Der Index R steht für Remission und der Index c für "coating", d. h. Beschichtung.

Die Farbkoordinaten des Farborts A werden vorzugsweise experimentell bestimmt. Die Messgrößen sind $\rho(\lambda)$ der spektrale Reflexionsgrad, $\tau(\lambda)$ der spektrale Transmissionsgrad. Sie werden gemäß DIN 5036-3 1979-11 ermittelt.

Die Farbkoordinaten des Farborts B werden vorzugsweise wie folgt berechnet:

Die Berechnung der Farbwerte erfolgt gemäß der DIN EN ISO 11664-3 (Aug-2013). Darin sind im Normvalenzsystem CIE 1931 X, Y und Z als Integrale über den Spektralbereich von 360 nm bis 830 nm nach den folgenden Gleichungen definiert:

$$X = k \int_\lambda \varphi_\lambda(\lambda)\bar{x}(\lambda)dn$$

$$Y = k \int_\lambda \varphi_\lambda(\lambda)\bar{y}(\lambda)dn$$

$$Z = k \int_\lambda \varphi_\lambda(\lambda)\bar{z}(\lambda)dn$$

Dabei ist $\varphi_\lambda(\lambda)$ die auszuwertende Farbreizfunktion, $\bar{x}(\lambda)$, $\bar{y}(\lambda)$ sind die Spektralwertfunktionen des farbmetrischen Normalbeobachters CIE 1931 (auch bekannt als farbmetrischer CIE 2°- Normalbeobachter).

k ist eine nachfolgend definierte Normalisierungskonstante.

Das Normverfahren zur Auswertung dieser Integrale besteht aus der numerischen Summierung von 360 nm bis 830 nm bei Wellenlängenintervallen $\Delta\lambda$ gleich 1 nm entsprechend den Gleichungen:

$$X = k \sum_\lambda \varphi_\lambda(\lambda)\bar{x}(\lambda)\Delta\lambda$$

$$Y = k \sum_\lambda \varphi_\lambda(\lambda)\bar{y}(\lambda)\Delta\lambda$$

$$Z = k \sum_\lambda \varphi_\lambda(\lambda)\bar{z}(\lambda)\Delta\lambda$$

Die Normalisierungskonstante k ist so gewählt, dass Y = 100 wird, wenn die Farbreizfunktion $\varphi_\lambda(\lambda)$ für alle Wellenlängen gleich 1 ist:

$$k = \frac{100}{\sum_\lambda S(\lambda)\bar{y}(\lambda)\Delta\lambda}$$

Weiterhin finden nachfolgend folgende Größen gemäß der DIN EN ISO 11664-4 (Jun-2012) Verwendung:

| $L^*$ | die CIELAB-Helligkeit |
| $a^*, b^*$ | die CIELAB-Koordinaten $a^*$, $b^*$ |
| $C_{ab}^*$ | die CIELAB-Buntheit, oder kurz: $C^*$ |
| $\Delta E_{ab}^*$ | der CIELAB-Farbabstand, oder auch kurz: $\Delta E^*$ |

Hierbei sind dann:

| $L_n^*$ | die CIELAB-Helligkeit mit einer Farbreizfunktion $\varphi_{\lambda,ie}(\lambda)$ |
| $a_n^*, b_n^*$ | die CIELAB-Koordinaten mit einer Farbreizfunktion $\varphi_{\lambda\,e}(\lambda)n$ |
| $C_{ab,n}^* = C_n^*$ | die CIELAB-Buntheit mit einer Farbreizfunktion $\varphi_{\lambda ie}(\lambda)$ |
| $\Delta E_{ab,nm}^* = \Delta E_{nm}^*$ | der CIELAB-Farbabstand zwischen zwei Farbreizfunktionen $\varphi_{\lambda,n}(\lambda)$ und $\varphi_{\lambda un}(\lambda)$ |

Zur Charakterisierung der beschriebenen Ausführungsbeispiele werden folgende Farbreizfunktionen zur Berechnung der Farbkenngrößen verwendet, für:

(1) Glaskeramikplatte, in Transmission (Index T = "Transmission"):

$$\varphi_{\lambda,T,S}(\lambda)=\tau(\lambda)S(\lambda)$$

resultierend im CIELAB: $C_T^*$ mit $S(\lambda)$

(2) Kochfläche = Glaskeramikplatte + Unterseitenbeschichtung, in Remission (Index R = "Remission"):

$$\varphi_{\lambda,R,S}(\lambda)=\rho(\lambda)S(\lambda)$$

resultierend im CIELAB: $L_R^*$ mit $S(\lambda)$

(3) Unterseitenbeschichtung in Remission

(Index RC = "Remission Coating"), mit der Rechenvorschrift
"Remission (Kochfläche) / Transmission(Glaskeramikplatte) / Transmission(Glaskeramikplatte)":

$\varphi_{\lambda,RC,S}(\lambda)$

$=\rho c(\lambda)S(\lambda)$ resultierend im CIELAB: $L_{RC}^*$ mit $S(\lambda)$

$=\rho(\lambda)/\tau(\lambda)/\tau(\lambda)\cdot S(\lambda)$ mit $\rho c(\lambda)=\rho(\lambda)/\tau(\lambda)/\tau(\lambda)$ als Rechenvorschrift zur Charakterisierung des spektralen Unterseitenbeschichtungs-Reflexionsgrades

(4) Der Einfluss der Glaskeramikplatte wird durch die $\Delta E$-Werte zwischen Remission von Kochfläche (Index R) zu Unterseitenbeschichtung (Index RC) beschrieben mit:

$$\varphi_{\lambda,R,S}(\lambda) \text{ und } \varphi_{\lambda,RC,S}(\lambda)$$

resultierend im CIELAB: $\Delta E_{RC,R}^*$ mit $S(\lambda)$

Dabei sind $\rho(\lambda)$ der spektrale Reflexionsgrad, $\tau(\lambda)$ der spektrale Transmissionsgrad (gemäß DIN 5036-3 1979-11) und $S(\lambda)$ die spektrale Verteilung der Normlichtart D65.

Es hat sich gezeigt, dass bei einem Abstand $\Delta E_{Rc,R}^* \leq 0{,}09 \cdot L_R^* + 3{,}4$ die erfindungsgemäßen Glaskeramiken gegenüber dem Stand der Technik (z. B. Nrn. 12, 14, 15) deutlich verbessert sind und sich dem Idealzustand einer (hellen) Schicht unter nahezu ideal farbneutralem Glas (Nr. 18) deutlich angenähert haben.

Vorzugsweise gilt:

$$\Delta E^*_{Rc,c} \leq 0{,}09 \cdot L^*_R + 3{,}05$$

und insbesondere

$$\Delta E^*_{Rc,c} \leq 0{,}09 \cdot L^*_R + 2{,}7.$$

Vorzugsweise gilt:

$$\Delta E^*_{Rc,c} \geq 0{,}07 \cdot L^*_R + 1{,}8,$$

besonders bevorzugt

$$\Delta E^*_{Rc,c} \geq 0{,}07 \cdot L^*_R + 2{,}2$$

und insbesondere

$$\Delta E^*_{Rc,c} \geq 0{,}07 \cdot L^*_R + 2{,}6.$$

Vorzugsweise gilt $50 \leq L^*_R \leq 98$, besonders bevorzugt $50 \leq L^*_R \leq 93$ und insbesondere $50 \leq L^*_R \leq 88$.

Keimbildner $TiO_2$

Die Komponente $TiO_2$ ist als wirksamer Keimbildner unverzichtbar für die Transparenz der Glaskeramik. Sie führt zu hohen Keimbildungsraten und damit auch bei kurzen Keramisierungszeiten zu ausreichender Bildung von Keimen und damit kleiner mittlerer Kristallitgröße. Damit ist es möglich, auch bei kurzen Keramisierungszeiten Glaskeramiken ohne visuell störende Streuung zu erhalten.

Höhere $TiO_2$-Gehalte sind aber aufgrund der Bildung von Fe/Ti-Farbkomplexen und Sn/Ti-Farbkomplexen kritisch. Daher sollte der $TiO_2$-Anteil vorzugsweise mehr als 1,6 Gew.-% und bis zu 2,8 Gew.-% betragen.

Bevorzugt ist ein minimaler $TiO_2$-Gehalt von 1,8 Gew.-%. Dieser Mindestgehalt ist für die Verringerung der Keramisierungszeiten vorteilhaft, um Streuung zu vermeiden. Besonders bevorzugt ist ein $TiO_2$-Gehalt von mehr als 2 Gew.-%. Bevorzugt sind höchstens 2,8 Gew.-% $TiO_2$ enthalten, um die Farbwirkung zu begrenzen.

Die Glaskeramikplatte der Kochfläche enthält vorzugsweise folgende Komponenten (in Gew.-% auf Oxidbasis):

| | |
|---|---|
| $Li_2O$ | 3 - 4,5 |
| $Al_2O_3$ | 19 - 24 |
| $SiO_2$ | 62 - 70 |
| $TiO_2$ | > 1,6 - 2,8 |
| $ZrO_2$ | 1 - 2,5 |
| $Fe_2O_3$ | 0,005 - 0,025. |

$Li_2O$, $Al_2O_3$ und $SiO_2$

Die Oxide $Li_2O$, $Al_2O_3$ und $SiO_2$ sind bzw. werden in den angegebenen Grenzen notwendige Bestandteile der Hochquarz- und/oder Keatit-Mischkristallphasen.

Für das kristallisierbare Glas und die daraus hergestellte Glaskeramik beträgt der Gehalt an $Li_2O$ vorzugsweise 3 bis 4,5 Gew.-%. Der Mindestgehalt ist erforderlich, um die gewünschte niedrige Verarbeitungstemperatur des Glases zu erreichen. Es hat sich gezeigt, dass es bei höheren Gehalten als 4,5 Gew.-% schwierig ist, die gewünschte thermische Nullausdehnung der Glaskeramik zu erreichen. Höhere Gehalte als 4,5 Gew.-% sind auch hinsichtlich der gewünschten niedrigen Farbe c* der Glaskeramik nachteilig. Bevorzugt beträgt der $Li_2O$-Gehalt weniger als 4,5 Gew.-%, weiter bevorzugt weniger als 4,2 Gew.-% und besonders bevorzugt weniger als 4 Gew.-%. Der Mindestgehalt beträgt bevorzugt 3,2 und besonders bevorzugt 3,4 Gew.-%.

Der Gehalt an $Al_2O_3$ beträgt vorzugsweise 19 - 24 Gew.-%. Höhere Gehalte als 24 Gew.-% sind nachteilig wegen der Neigung zu Entglasung von Mullit bei der Formgebung. Weiter hat sich gezeigt, dass mit höheren Gehalten die Streuung bei kurzen Keramisierungszeiten zunimmt. Bevorzugt ist daher ein Anteil von weniger als 23 Gew.-%. Der Mindestgehalt beträgt 19 Gew.-%, weil $Al_2O_3$ für eine niedrige Verarbeitungstemperatur und eine geringe Farbe c* der Glaskeramik von Vorteil ist. Der $Al_2O_3$-Mindestgehalt beträgt bevorzugt mindestens 20 Gew.-%.

Der Gehalt der Hauptkomponente $SiO_2$ soll mindestens 62 Gew.-% betragen, weil dies für die geforderten Eigenschaften der Glaskeramik, wie z.B. niedrige thermische Ausdehnung und chemische Beständigkeit vorteilhaft ist. Darüber hinaus wird die Streuung bei kurzen Keramisierungszeiten verringert. Besonders vorteilhaft ist ein Mindestgehalt von 64 Gew.-%. Der $SiO_2$-Gehalt soll maximal 70 Gew.-% betragen, weil diese Komponente die Verarbeitungstemperatur des Glases und die Schmelztemperatur erhöht. Bevorzugt beträgt der $SiO_2$-Gehalt maximal 68 Gew.-%.

Keimbildner $ZrO_2$

Als weiterer Keimbildner ist vorzugsweise $ZrO_2$ vorgesehen. Der $ZrO_2$-Gehalt beträgt vorzugsweise 1 bis 2,5 Gew.-%. Bevorzugt ist der $ZrO_2$-Gehalt auf weniger als 2,2 Gew.-% und weiter bevorzugt auf weniger als 2 Gew.-% begrenzt, da höhere Gehalte das Einschmelzverhalten des Gemenges bei der Glasherstellung verschlechtern und es bei der Formgebung zur Entglasung durch Bildung von Zrhaltigen Kristallen kommen kann. Da die Komponente hilft, höhere Gehalte des alternativen Keimbildner $TiO_2$ zu vermeiden, ist sie für die Bereitstellung einer Glaskeramik mit niedriger Farbe c* von Vorteil. Der $ZrO_2$-Mindestgehalt beträgt bevorzugt 1,6 Gew.-%.

$Fe_2O_3$

Wegen der hohen Kosten eisenarmer Gemengerohstoffe ist es unwirtschaftlich, den $Fe_2O_3$-Gehalt des kristallisierbaren Glases auf Werte unter 0,005 Gew.-%, also auf weniger als 50 ppm zu begrenzen. Andererseits erhöht sich mit dem $Fe_2O_3$-Gehalt auch die Konzentration der Fe/Ti-Farbkomplexe in der Glaskeramik. Die Farbe c* wird erhöht und durch Absorption wird die Helligkeit $L_T^*$ vermindert. Das kristallisierbare Glas und die daraus hergestellte Glaskeramik sollen deswegen höchstens 0,025 Gew.-%, bevorzugt bis zu 0,02 Gew.-% an $Fe_2O_3$ enthalten.

Läutermittel

Die Läuterung kann durch den Zusatz chemischer Läutermittel wie Arsen-, Antimon- oder Ceroxid und von Läuterzusätzen wie Manganoxid, Sulfat-, Halogenidverbindungen in Gesamtgehalten vorzugsweise bis zu 2,0 Gew.-% unterstützt werden.

Vorzugsweise enthält die Glaskeramikplatte 0,1 - 2,0 Gew.-% $As_2O_3$, insbesondere 0,4 - 2,0 Gew.-%.

Alkalien

Die Alkalien $Na_2O$ und $K_2O$ erniedrigen die Schmelztemperatur und die Verarbeitungstemperatur bei der Formgebung des Glases. Das Einschmelzen der schwer löslichen Rohstoffe für $ZrO_2$ und $SiO_2$ wird beschleunigt. Die Gehalte müssen bei beiden auf maximal 1,5 Gew.-% begrenzt werden, weil diese Komponenten nicht in die Kristallphasen eingebaut werden, sondern in der Restglasphase der Glaskeramik verbleiben. Zu hohe Gehalte beeinträchtigen das Kristallisationsverhalten bei der Umwandlung des kristallisierbaren Ausgangsglases in die Glaskeramik und wirken sich ungünstig auf die Zeit-/Temperaturbelastbarkeit der Glaskeramik aus.

Bevorzugt ist der $Na_2O$-Gehalt 0 Gew.-% oder > 0 Gew.-%, und besonders bevorzugt enthält das Glas mindestens 0,05 Gew.-% $Na_2O$. Der maximale Anteil beträgt vorzugsweise 1,5 Gew.-%, insbesondere 1 Gew.-%. Vorzugsweise beträgt der $Na_2O$-Anteil 0,1 Gew.-% - 1,5 Gew.-%.

Die Glaskeramikplatte enthält vorzugsweise $Na_2O$ mit einem Anteil von 0,05 - 1,5 Gew.-%.

Bevorzugt ist der $K_2O$-Gehalt 0 Gew.-% oder > 0 Gew.-%, und besonders bevorzugt enthält das Glas mindestens 0,05 Gew.-% $K_2O$. Der maximale Anteil beträgt vorzugsweise 1,5 Gew.-%, insbesondere 1 Gew.-%. Vorzugsweise beträgt der $K_2O$-Anteil 0,1 Gew.-% - 1,5 Gew.-%.

Die Glaskeramikplatte enthält vorzugsweise $K_2O$ mit einem Anteil von 0,05 - 1,5 Gew.-%.

In einer bevorzugten Ausführung gilt 0,2 Gew.-% $\leq Na_2O + K_2O \leq$ 1,5 Gew.-% (Bedingung B7a). Die Summe der

Alkalien $Na_2O + K_2O$ beträgt weiter bevorzugt maximal 1,2 Gew.-%. Die Summe der Alkalien $Na_2O + K_2O$ beträgt besonders bevorzugt mindestens 0,4 Gew.-%, um die Schmelzbarkeit weiter zu verbessern und die Verarbeitungstemperatur zu erniedrigen. Besonders bevorzugt gilt 0,2 Gew.-% $\leq Na_2O + K_2O \leq$ 1,2 Gew.-% (Bedingung B7b).

MgO

Die Komponente MgO ist sowohl Bestandteil der Mischkristalle als auch der Restglasphase und hat daher starken Einfluss auf viele Eigenschaften. Die Komponente erniedrigt die Schmelz- und Verarbeitungstemperatur des Glases und begünstigt daher die wirtschaftliche Herstellung. Der MgO-Gehalt beträgt mindestens 0,1 Gew.-% und besonders bevorzugt mindestens 0,15 Gew.-%. In der Glaskeramik erhöht die Komponente die thermische Ausdehnung und führt zu einer besonders nachteiligen Verstärkung der Farbe. Dies wird der Begünstigung der Ausbildung von Fe/Ti- und Sn/Ti-Farbspezies zugeschrieben.

Der MgO-Gehalt soll weniger als 0,5 Gew.-%, bevorzugt höchstens 0,4 Gew.-% und besonders bevorzugt höchstens 0,35 Gew.-% betragen. In einem bevorzugten MgO-Wertebereich von 0,1 Gew.-% bis 0,4 Gew.-% lassen sich die Anforderungen an geringe Farbe der Glaskeramik und niedriger Verarbeitungstemperatur besonders gut miteinander verbinden. Die thermische Ausdehnung der Glaskeramik lässt sich dabei in der Nähe der Nullausdehnung einstellen.

Erdalkalien

Wie die Alkalien $Na_2O$ und $K_2O$ werden auch die Erdalkalien CaO, SrO und BaO nicht in die Mischkristallphasen eingebaut, sondern verbleiben in der Restglasphase der Glaskeramik. Sie sind vorteilhaft, um die Schmelz- und Verarbeitungstemperaturen abzusenken. Zu hohe Gehalte beeinträchtigen das Keimbildungs- und Kristallisationsverhalten bei der Umwandlung des kristallisierbaren Glases in die Glaskeramik und wirken sich ungünstig auf die Zeit-/Temperaturbelastbarkeit der Glaskeramik aus.

Die Komponente CaO hat sich als vorteilhaft erwiesen, um die Verarbeitungstemperatur $V_A$ abzusenken und die Entglasungsfestigkeit zu verbessern. Sie führt allerdings zu einer erhöhten Farbe und Streuung bei kurzen Keramisierungszeiten. CaO ist in Gehalten von maximal 2 Gew.-%, bevorzugt maximal 1 Gew.-% enthalten. Besonders bevorzugt ist die Obergrenze für den CaO-Gehalt von weniger als 0,8 Gew.-%, um die Streuung bei kurzen Keramisierungszeiten zu minimieren. Bevorzugt gilt CaO gleich 0 Gew.-% oder > 0 Gew.-%, besonders bevorzugt $\geq$ 0,05 Gew.-%, weiter bevorzugt mindestens 0,1 Gew.-% und besonders bevorzugt mindestens 0,3 Gew.-%. Ein bevorzugter Bereich ist 0,04 Gew.-% bis 2 Gew.-%.

Die Glaskeramikplatte enthält vorzugsweise CaO mit einem Anteil von 0,04 - 2 Gew.-%.

Der BaO-Gehalt beträgt vorzugsweise bis 4 Gew.-%. Der SrO-Gehalt beträgt vorzugsweise bis 2 Gew.-%. Der BaO-Gehalt beträgt bevorzugt bis 2,5 Gew.-%. Der SrO-Gehalt beträgt bevorzugt bis 1,5 Gew.-%. Besonders bevorzugt ist ein BaO-Gehalt von 0 Gew.-% oder > 0 Gew.-%, wenigstens 0,1 Gew.-%.

Ein bevorzugter Bereich für BaO ist 0,1 Gew.-% bis 4 Gew.-%.

Der SrO-Anteil beträgt vorzugsweise 0 Gew.-%, besonders bevorzugt > 0 Gew.-%, insbesondere $\geq$ 0,01 Gew.-%.

Ein bevorzugter Bereich für SrO ist 0,01 Gew.-% bis 2 Gew.-%.

Um die Schmelz- und Verarbeitungstemperaturen abzusenken, ist es bevorzugt, wenn die Summe der SrO- und BaO-Gehalte 0,5 - 2,5 Gew.-% (Bedingung B5) beträgt. Höhere Gehalte sind für die Zeit-/Temperaturbelastbarkeit der Glaskeramik nachteilig.

Die Alkalien $Na_2O$, $K_2O$ und die Erdalkalien CaO, SrO, BaO reichern sich außer in der Restglasphase zwischen den Kristallen auch an der Oberfläche der Glaskeramik an. Beim Keramisieren bildet sich eine ca. 50 bis 1000 nm dicke glasige Oberflächenschicht, die nahezu frei ist von Kristallen und die mit diesen Elementen angereichert ist, wobei $Li_2O$ abgereichert ist. Diese glasige Oberflächenschicht wirkt sich günstig auf die Säurebeständigkeit der Glaskeramikoberfläche aus. Für ausreichende Dicke der glasigen Schicht von mindestens 50 nm sind die Mindestgehalte beider Klassen von Komponenten, d. h. der Alkalien und der Erdalkalien, erforderlich. Höhere Gehalte als die Obergrenzen können zu höheren Dicken der glasigen Schicht führen, was für die Festigkeit der Glaskeramik nachteilig ist.

Es hat sich als vorteilhaft erwiesen, die Gehalte der Restglasbildner definiert einzustellen. Neben der Einstellung der glasigen Oberflächenschicht ist für eine geringe Streuung eine gute Anpassung der Brechungsindizes von Kristallen und Restglasphase erforderlich. Da sich die Fe/Ti-Farbkomplexe in der Restglasphase bilden, ist diese auch für deren Bildungskinetik maßgeblich. Die Gehalte der Restglasbildner müssen jedoch begrenzt werden. Höhere Gehalte wirken sich ungünstig auf die Zeit-/Temperaturbelastbarkeit der Glaskeramik aus. Auch ist die Kristallisation der Hochquarz-Mischkristalle beeinträchtigt und durch Bildung größerer Kristallite kommt es zu verstärkter Streuung. Der Summe der Restglasbildner kommt eine entscheidende Bedeutung zu, um Farbe, Helligkeit, Streuung und wirtschaftliche Herstellung zu vereinbaren und der Nachteil gegenüber Spezialgläsern mit hohen Werten der Helligkeit und niedriger Farbe kann vermindert werden.

Das erfindungsgemäße Glas besitzt bevorzugt eine Summe der Restglas bildenden Komponenten $Na_2O + K_2O$

+ CaO + SrO + BaO (Gew.-%) von bevorzugt weniger als 3, bevorzugt weniger als 2,6 und besonders bevorzugt weniger als 2,2 Gew.-%. Die Summe der Komponenten soll bevorzugt mehr als 1,5 und besonders bevorzugt mehr als 1,7 Gew.-% betragen.

Die Streuung (engl. haze) wird nach ASTM D1003-13 an 4 mm dicken polierten Proben der LAS-Glaskeramik gemessen. Der haze-Wert beträgt bevorzugt weniger als 2,5 %, weiter bevorzugt weniger als 2 % und besonders bevorzugt weniger als 1,8 %. Oberhalb von 2,5 % ist die Trübung in der Regel visuell störend. Werte weniger als 2% sind bevorzugt, weil die Streuung sonst bei dunklen, also zum Beispiel schwarzen Unterseitenbeschichtungen auffällig werden kann.

Die erfindungsgemäße transparente Glaskeramik weist dadurch keine visuell störende Lichtstreuung auf. Dadurch wird die Durchsicht auf Gegenstände und Unterseitenbeschichtungen nicht verfälscht. Leuchtende Anzeigen wie Displays oder Bildschirme unter der Glaskeramikplatte sind dadurch klar mit scharfen Konturen und ohne Streuung sichtbar.

ZnO

Die Komponente ZnO ist vorteilhaft für die Erniedrigung der Schmelz- und Verarbeitungstemperatur des Glases und für verminderte Streuung bei kurzen Keramisierungszeiten. ZnO wird in die Mischkristallphasen eingebaut, und ein Teil verbleibt auch in der Restglasphase. Die Komponente führt vergleichbar der Komponente $Li_2O$ zu einer Verringerung der thermischen Ausdehnung der Glaskeramik. Der ZnO-Gehalt ist wegen der Verdampfungsneigung aus der Glasschmelze und wegen der geforderten Nullausdehnung der Glaskeramik auf Werte von höchstens 3 Gew.-% begrenzt. Bevorzugt ist ein ZnO-Gehalt von höchstens 2,5 Gew.-% und besonders bevorzugt von höchstens 2,0 Gew.-%. Vorzugsweise gilt ZnO gleich 0 Gew.-% oder > 0 Gew.-%. Bevorzugt ist ein Mindestgehalt von 0,5 und besonders bevorzugt mehr als 1 Gew.-%. Der ZnO-Gehalt soll vorzugsweise 0,5 Gew. % bis 3 Gew.-% betragen.

Die Glaskeramikplatte enthält vorzugsweise ZnO mit einem Anteil von 0,5 - 3 Gew.-%.

$SnO_2$

In einer ersten Ausführungsform mit Arsen-Läuterung weist die Glaskeramikplatte kein absichtlich zugesetztes $SnO_2$ auf ($SnO_2$-Anteil gleich 0%), weil die Komponente für die Farbe der Glaskeramik wegen der Bildung der Sn/Ti-Farbspezies bei der Kristallisation kritisch ist. Es sind dann nur die aus Verunreinigungen stammenden Gehalte von weniger als 50 ppm vorhanden.

Eine neue besondere Aufmerksamkeit gilt den Fertigungseigenschaften bei der gebräuchlichen Formgebung über wassergekühlte Walzen. Die großtechnischen Versuche mit $SnO_2$-geläuterten LAS-Gläsern mit 0,18 Gew.-% $SnO_2$, die in der WO 2013/124373 A1 offenbart sind, haben gezeigt, dass sich bei der Formgebung ein Sn-haltiger Walzbelag aufbaut. Aufgrund der Wirkung von Zinnoxid als Keimbildner induziert dieser Walzbelag im Kontakt mit der Glasschmelze zunehmend Oberflächenkristalle auf dem sich abkühlenden Glasband. Diese sind visuell auffällig und können die Festigkeit erniedrigen. Die Entfernung des Walzbelags ist mit Produktionsausfall verbunden. Mit der Erfindung wird dieser wirtschaftliche Nachteil durch den Walzbelag vermindert.

Zur Vermeidung dieser Nachteile wird der $SnO_2$-Gehalt gegenüber dem Stand der Technik begrenzt und beträgt vorzugsweise weniger als 0,10 Gew.-%, weiter bevorzugt weniger als 0,08 Gew.-% und besonders bevorzugt weniger als 0,05 Gew.-%. Mit der Verringerung des $SnO_2$-Gehaltes nehmen Farbe und Walzbelag kontinuierlich ab. Eine deutliche Verbesserung in der Bildung von Oberflächenkristallen bei der Formgebung zeigt sich unterhalb von 0,10 Gew.-% $SnO_2$.

In einer zweiten Ausführungsform ist für $SnO_2$ ist ein Mindestgehalt von 0,01 Gew.-% bevorzugt, insbesondere wenn die Läutermittel Arsen- oder Antimonoxid nicht eingesetzt werden, wirkt das polyvalente Zinnoxid der Blasenbildung (reboil) an Edelmetalleinbauten in der Schmelzwanne entgegen. Auch schon bei geringen Gehalten wirkt das $SnO_2$ als Läutermittel und stellt in Kombination mit technischen Maßnahmen an der Schmelzwanne die geforderte Blasenqualität sicher. Bevorzugt enthält das Glas und die daraus hergestellte Glaskeramik mindestens 0,03 Gew.-% und besonders bevorzugt mindestens 0,04 Gew.-% $SnO_2$.

Ein unter Würdigung aller Aspekte bezüglich geringer Farbe und wirtschaftlicher Fertigungseigenschaften besonders bevorzugter Bereich ist 0,03 bis < 0,10 Gew.-% $SnO_2$.

$P_2O_5$

Zur Verbesserung der Schmelzbarkeit und Entglasungsfestigkeit bei der Formgebung können bis zu 4 Gew.-% $P_2O_5$ enthalten sein. Höhere Gehalte sind nachteilig für die chemische Beständigkeit. Vorzugsweise gilt für $P_2O_5$ 0 Gew.-% oder > 0 Gew.-%. Eine bevorzugte Untergrenze liegt bei 0,01 Gew.-% und besonders bevorzugt bei 0,02 Gew.-%. Eine bevorzugte Obergrenze liegt bei 2 Gew.-% $P_2O_5$. Ein bevorzugter Bereich ist 0,01 Gew.-% bis 2 Gew.-%.

Die Glaskeramikplatte enthält vorzugsweise $P_2O_5$ mit einem Anteil von 0,01 Gew.-% bis 2 Gew.-%.

B$_2$O$_3$, PbO und Fluor

Auch der Zusatz von bis zu 1 Gew.-% B$_2$O$_3$ verbessert Schmelzbarkeit und Entglasungsfestigkeit, ist aber nachteilig für die Zeit-/Temperaturbelastbarkeit der Glaskeramik. Dies gilt auch für Zusätze von Fluor. Beiden Komponenten ist gemeinsam, dass sie die Stabilität der für die transparente Glaskeramik maßgeblichen Hauptkristallphase Hochquarz-Mischkristalle vermindern und den Übergang in die Keatit-Mischkristallphase begünstigen. Bevorzugt enthält die Glaskeramik weniger als 0,5 und besonders bevorzugt weniger als 0,2 Gew.-% B$_2$O$_3$. Besonders bevorzugt ist die Glaskeramik technisch frei von B$_2$O$_3$, das heißt die Gehalte liegen unter 1000 ppm, bevorzugt unter 500 und besonders bevorzugt unter 100 ppm.

Für den Zusatz von Fluor ist eine bevorzugte Obergrenze 0,5 Gew.-%. Weiter bevorzugt soll der Gehalt weniger als 0,2 Gew.-%, weiter bevorzugt weniger als 0,1 Gew.-%, weiter bevorzugt weniger als 500 ppm und besonders bevorzugt weniger als 100 ppm betragen.

Der Zusatz von PbO verbessert Schmelzbarkeit und Entglasungsfestigkeit, ist aber nachteilig für die Zeit-/Temperaturbelastbarkeit der Glaskeramik und ist für eine umweltfreundliche Zusammensetzung unerwünscht. Der Gehalt soll bevorzugt weniger als 0,1 Gew-% und weiter bevorzugt weniger als 100 ppm betragen. Besonders bevorzugt wird kein PbO zugesetzt und es sind nur die aus Verunreinigungen stammenden Gehalte von typischerweise weniger als 5 ppm vorhanden.

Nd$_2$O$_3$

Der Nd$_2$O$_3$-Anteil kann 0 Gew.-% oder > 0 Gew.-% sein.

Bei den aus den erfindungsgemäßen Lithiumaluminiumsilikat-Gläsern hergestellten transparenten Glaskeramiken wird die störende auf Fe/Ti- und/oder Sn/Ti-Farbkomplexen beruhende Farbe in einer bevorzugten Ausführungsform durch Zusätze von Nd$_2$O$_3$ in Gehalten von 0,005 Gew.-% bis 0,25 Gew.-% verringert. Unterhalb von 0,005 Gew.-% ist die entfärbende Wirkung gering und bevorzugte Untergrenzen für Nd$_2$O$_3$ sind 0,01 Gew.-%, insbesondere 0,03 Gew.-%. Oberhalb von 0,5 Gew.-% wird die Helligkeit durch die Absorption der Nd-Banden im Bereich des sichtbaren Lichtes unerwünscht verschlechtert. Bevorzugt werden daher bis zu 0,25 Gew.-% zugesetzt. Ein bevorzugter Bereich für Nd$_2$O$_3$ ist 0,01 Gew.-% bis 0,25 Gew.-%.

CoO

Zusätze von CoO in Mengen bis zu 30 ppm, bevorzugt bis zu 20 ppm können die Entfärbung unterstützen. Bevorzugt ist ein CoO-Gehalt von 0,1 ppm bis 20 ppm CoO. Oberhalb 30 ppm erzeugt das CoO in transparenten Glaskeramiken einen rötlichen Farbstich.

MgO/As$_2$O$_3$

Vorzugsweise gilt für die Komponenten MgO und As$_2$O$_3$ die Bedingung

$$\text{MgO} / \text{As}_2\text{O}_3 < 0{,}8 \text{ (Bedingung 6)}$$

mit As$_2$O$_3$ > 0 Gew.-%.

Dem Verhältnis der Komponenten MgO / As$_2$O$_3$ kommt eine entscheidende Bedeutung zu, um geringe Farbe, große Helligkeit der Glaskeramik mit guter Läuterbarkeit und niedrigen Schmelz- und Formgebungstemperaturen des Glases zu vereinbaren. So können bei wirtschaftlicher Herstellung die Buntheit c* weiter verringert und die Helligkeit Y der Glaskeramik weiter verbessert werden und der Nachteil gegenüber Spezialgläsern mit hohen Werten der Helligkeit und niedriger Farbe kann vermindert werden.

Das erfindungsgemäße Glas besitzt ein Verhältnis der Komponenten MgO / As$_2$O$_3$ (beide in Gew.-%) von bevorzugt weniger als 1 (Bedingung B2a), weiter bevorzugt weniger als 0,8 und insbesondere weniger als 0,7 und besonders bevorzugt weniger als 0,5.

Dies ist eine wesentliche Bedingung, um die gewünschten günstigen Fertigungseigenschaften des Glases mit geringer Farbe, hoher Helligkeit der daraus hergestellten transparenten Glaskeramik zu vereinbaren.

Vorteilhafterweise gilt für das Verhältnis der Komponenten:

$$\text{MgO}/\text{As}_2\text{O}_3 < 0{,}7 \text{ (Bedingung B6a)}$$

In Versuchsreihen mit variierten MgO- und $As_2O_3$-Gehalten wurde herausgefunden, dass die beiden Komponenten in ihrer Wirkung auf den Fe/Ti-Farbkomplex entgegengesetzt wirken. Wie beschrieben verstärken höhere MgO-Gehalte die Bildung der Farbkomplexe, während diese Bildung durch höhere $As_2O_3$-Gehalte verringert wird. Durch eine bevorzugte Obergrenze des Quotienten der beiden ergänzen sich die Effekte in vorteilhafter Weise.

Das Verhältnis der Komponenten soll bevorzugt größer als 0,05, weiter bevorzugt größer als 0,08 und besonders bevorzugt größer als 0,1 sein. Dies ist darin begründet dass bei niedrigen MgO-Gehalten trotz höherer $As_2O_3$-Gehalte die Läuterung wegen der höheren Schmelztemperatur verschlechtert wird.

Soweit für Komponenten ein Anteil von 0 Gew.-% angegeben wird, bedeutet dies, dass auf die betreffende Komponente im Rohstoffgemenge verzichtet wird. Als unvermeidliche Verunreinigungen können diese Komponenten jedoch vorhanden sein.

In einer bevorzugten Ausführungsform ist die Kochfläche dadurch gekennzeichnet, dass die Glaskeramikplatte folgende Komponenten (in Gew.-% auf Oxidbasis) enthält:

| | |
|---|---|
| $Li_2O$ | 3,2 - 4,5 |
| $Al_2O_3$ | 19 - 24 |
| $SiO_2$ | 62 - 68 |
| $Na_2O$ | 0 - 1 |
| $K_2O$ | 0 - 1 |
| $Na_2O + K_2O$ | 0,2 - 1,5 (Bedingung B7a) |
| MgO | 0,05 - < 0,5 |
| $TiO_2$ | 1,8 - 2,8 |
| $ZrO_2$ | 1 - < 2,2 |
| $TiO_2 + ZrO_2$ | + $SnO_2$ 3,8 - 4,8 (Bedingung B8) |
| $Fe_2O_3$ | 0,007 - 0,02 |
| CaO | 0 - 1,5 |
| SrO | 0 - 1,5 |
| BaO | 0 - 2,5 |
| ZnO | 0 - 2,5 |
| $P_2O_5$ | 0 - 4 |

Gemäß einer weiteren Ausführungsform ist die Kochfläche dadurch gekennzeichnet, dass die Glaskeramikplatte die folgenden Komponenten (in Gew.-% auf Oxidbasis) enthält:

| | |
|---|---|
| $Li_2O$ | 3,2 - < 4,2 |
| $Al_2O_3$ | 20 - < 23 |
| $SiO_2$ | 62 - 68 |
| $Na_2O$ | 0,1 - 1 |
| $K_2O$ | 0 - 1 |
| $Na_2O + K_2O$ | 0,2 - 1,2 (Bedingung B7b) |
| MgO | 0,1 - 0,4 |
| CaO | 0,05 - 1 |
| SrO | 0 - 1,5 |
| BaO | 0 - 2,5 |
| SrO + BaO | 0,5 - 2,5 |
| $TiO_2$ | 1,8 - 2,8 |
| $ZrO_2$ | 1 - < 2,2 |
| $SnO_2$ | 0,01 - < 0,10 |
| $TiO_2 + ZrO_2 + SnO_2$ | 3,8 - 4,8 (Bedingung B8) |
| $Fe_2O_3$ | 0,008 - 0,02 |
| ZnO | 0 - 2,5 |
| $B_2O_3$ | 0 - 1 |
| $P_2O_5$ | 0 - 2 |

**EP 4 026 813 B1**

Die zuvor genannten Zusammensetzungen sind so zu verstehen, dass die aufgeführten Komponenten wenigstens 98 Gew.-%, in der Regel 99 Gew.-% der Gesamtzusammensetzung betragen. Verbindungen einer Vielzahl von Elementen wie z. B. F, Cl, den Alkalien Rb, Cs oder Elementen wie Mn, Hf sind bei den großtechnisch verwendeten Gemengerohstoffen übliche Verunreinigungen. Andere Verbindungen wie z.B. solche der Elemente W, Nb, Ta, Y, Mo, Seltene Erden, Bi, V, Cr, Ni können in geringen Anteilen, typischerweise im ppm-Bereich, enthalten sein.

Der Wassergehalt der kristallisierbaren Gläser zur Herstellung der Glaskeramiken liegt abhängig von der Wahl der Gemengerohstoffe und den Prozessbedingungen bei der Schmelze vorzugsweise zwischen 0,015 und 0,06 mol/l. Dies entspricht $\beta$-OH-Werten von 0,16 bis 0,64 mm$^{-1}$. Bei der Umwandlung in die Glaskeramik ändert sich die IR-Bande, die zur Bestimmung des Wassergehaltes herangezogen wird. Dadurch ändert sich der $\beta$-OH-Wert für die Glaskeramik, ohne dass sich dabei der Wassergehalt ändert. Die Methode zur Bestimmung der $\beta$-OH-Werte ist z. B. in der EP 1 074 520 A1 beschrieben.

Glaskeramik

Die kristallisierbaren Lithiumaluminiumsilikat-Gläser werden durch einen mehrstufigen Temperaturprozess in eine Glaskeramik umgewandelt.

Die Glaskeramik weist dieselbe Zusammensetzung auf wie das Lithiumaluminiumsilikat-Glas.

Die Glaskeramik enthält Hochquarz-Mischkristalle als Hauptkristallphase.

Die thermische Ausdehnung der Glaskeramik wird bevorzugt in einem Temperaturbereich zwischen Raumtemperatur und 700 °C auf Werte um $0 \pm 0,5 \cdot 10^{-6}$/K eingestellt.

Die Unterseitenbeschichtung besteht vorzugsweise aus mindestens einer Lage.

Die Unterseitenbeschichtung besteht vorzugsweise aus zwei Lagen, wobei eine farbgebende erste Lage auf der Unterseite der Glaskeramikplatte aufgebracht ist und wobei eine zweite Lage auf der ersten Lage aufgebracht ist.

Die erste farbgebende Lage ist vorzugsweise direkt auf der Unterseite der Glaskeramikplatte aufgebracht.

Die erste Lage weist vorzugsweise ein vernetztes Polysiloxan auf. Vorzugsweise weist die erste Lage Pigmente und/oder plättchenförmige Füllstoffe auf.

Die zweite Lage weist vorzugsweise ein unvernetztes Polysiloxan auf, das vorzugsweise zusätzlich Talkum oder ein anderes Schichtsilicat enthalten kann.

Wenn die Unterseitenbeschichtung aus einer Lage besteht, besteht diese vorzugsweise aus der ersten Lage.

Als Siliconharz für die erste Lage sind zur Schaffung einer farbgebenden Schicht feste oder flüssige Polysiloxane mit Methyl- oder Phenyl-Gruppen als organische Reste und Hydroxy-, Alkoxy-, oder Vinyl-Resten als funktionelle Gruppe vorgesehen. Über die funktionellen Gruppen erfolgt die thermische Vernetzung durch Einbrennen bei über 180 °C.

Die Schichtdicke jeder Lage beträgt vorzugsweise 10-50 $\mu$m, insbesondere 15-30 $\mu$m. Die Gesamtschichtdicke des zweilagigen Systems sollte insbesondere mindestens 20 $\mu$m betragen, damit eine Kratzfestigkeit von 500 g erreicht wird. Die Gesamtschichtdicke beträgt vorzugsweise 25-65 $\mu$m, insbesondere 30-50 $\mu$m, um noch höhere Kratzfestigkeiten zu erreichen.

Als Pigmente sind anorganische Buntpigmente und Schwarzpigmente wie Eisenoxidpigmente, Chromoxidpigmente oder oxidische Mischphasenpigmente mit Rutil- oder Spinellstruktur und anorganische Weißpigmente (Oxide, Carbonate, Sulfide) bevorzugt. Als Beispiele für geeignete Pigmente werden die Eisenoxidrot-Pigmente aus Hämatit ($\alpha$-$Fe_2O_3$), Eisenoxidschwarz-Pigmente mit $Fe_3O_4$ sowie die Mischphasenpigmente Cobaltblau $CoAlO_4$, Zinkeisenbraun $(Zn, Fe)FeO_4$, Chromeisenbraun $(Fe, Cr)_2O_4$, Eisenmanganschwarz $(Fe, Mn)(Fe, Mn)_2O_4$, Spinellschwarz $Cu(Cr, Fe)_2O_4$ und als Weißpigmente $TiO_2$ und $ZrO_2$ genannt.

Um spezielle Effekte bei der Farbgebung zu erzielen, können auch anorganische Glanzpigmente (Metalleffektpigmente, Perlglanzpigmente und Interferenzpigmente) eingesetzt werden.

Als Metalleffektpigmente sind plättchenförmige Teilchen aus Aluminium-, Kupfer- oder Kupfer-Zink-Legierungen geeignet, insbesondere wenn sie zur Steigerung der Farbstabilität bei thermischer Belastung mit z. B. Siliciumoxid beschichtet sind. Um die Dichtigkeit der Schicht gegenüber Wasser, Öl, Klebstoff u. a. Flüssigkeiten zu erhöhen, können aufschwimmende Typen (Leafing-Pigmente) eingesetzt werden. Als Perlglanzpigmente und Interferenzpigmente sind z. B. Glimmer, die mit $TiO_2$, $SiO_2$ oder $Fe_2O_3$ beschichtet sind, geeignet.

Um aus dem Siliconharz, den Pigmenten und den Füllstoffen eine Farbpaste zu erhalten, die für den Siebdruck geeignet ist, muss noch ein Lösungsmittel zugesetzt werden, in dem das Siliconharz gelöst sowie die Pigmente und Füllstoffe dispergiert werden können. Um die Benetzung des Glas- oder Glaskeramiksubstrats zu optimieren, können der Farbpaste Entschäumer, Netz- und Verlaufsmittel zugesetzt werden.

Die Dicke der Glaskeramikplatte beträgt vorzugsweise 2 mm bis 20 mm.

Beispielhafte Ausführungsformen werden nachfolgend anhand der Figuren erläutert.

Es zeigen:

Fig.1    einen Schnitt durch eine Kochfläche,

Fig.2     ein Diagramm im CIELAB-Farbsystem zur Erläuterung der ersten Transmissionsvariante (L* in Abhängigkeit von c*),

Fig.3     ein Diagramm wie Fig.2 jedoch im CIE-Farbsystem zur Erläuterung der Transmissionsvariante, und

Fig.4     ein Diagramm mit $\Delta E_{Rc,R}$ in Abhängigkeit von $L_R^*$ zur Erläuterung der Remissionsvariante.

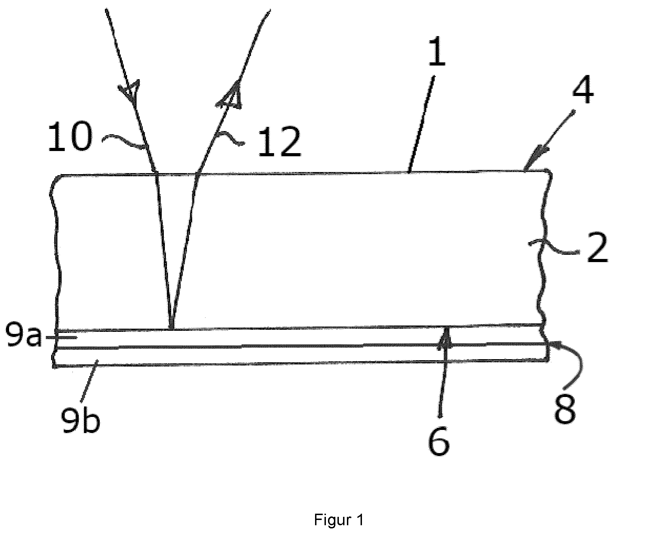

In der Figur 1 ist ein Schnitt durch eine Kochfläche 1 dargestellt, die eine Glaskeramikplatte 2 aufweist, die eine Oberseite 4 und eine Unterseite 6 aufweist. An der Unterseite 6 ist eine Unterseitenbeschichtung 8 angebracht, die aus einer ersten Lage 9a und einer zweiten Lage 9b besteht.

Beispielhaft ist ein einfallender Lichtstrahl 10 und ein an der Unterseitenbeschichtung 8 reflektierter Lichtstrahl 12 eingezeichnet, wie sie für die Remissionsmessungen, zum Beispiel für die Messung von $L_R^*$ eingesetzt werden.

In der Tabelle 1 sind die Glaszusammensetzungen, Komponentenbeziehungen und Eigenschaften von 11 erfindungsgemäßen Gläsern (Glas Nr. 1 - 11) und von 6 Vergleichsgläsern (Glas Nr. 12 - 18) zusammengestellt, wobei Glas Nr. 18 ein Borofloatglas, das unter dem Namen BOROFLOAT 40 von der SCHOTT AG vertrieben wird, betrifft.

Der mit IR-Spektroskopie gemessene Wassergehalt ist für einige der kristallisierbaren Gläser in Tabelle 1 angegeben.

In Tabelle 1 sind auch die Eigenschaften im glasigen Zustand wie Transformationstemperatur Tg [°C], Verarbeitungstemperatur $V_A$ [°C], $10^2$ dPas-Temperatur [°C], obere Entglasungsgrenze OEG [°C] und Entglasungsfestigkeit $V_A$ - OEG aufgeführt. Zur Messung der OEG werden die Gläser in Pt/Rh10-Tiegeln geschmolzen. Anschließend werden die Tiegel für 5 Stunden bei verschieden Temperaturen im Bereich der Verarbeitungstemperatur gehalten. Die höchste Temperatur, bei der die ersten Kristalle an der Kontaktfläche der Glasschmelze zur Tiegelwand auftreten, bestimmt die OEG-Temperatur.

Die erfindungsgemäßen kristallisierbaren LAS-Gläser 1 bis 11 und die Vergleichsgläser 12 bis 17 wurden aus in der Glasindustrie üblichen Gemengerohstoffen bei Temperaturen von 1620 °C über 4 Stunden eingeschmolzen.

Nach dem Einschmelzen des Gemenges in Tiegeln aus gesintertem Kieselglas wurden die Laborschmelzen in Pt/Rh-Tiegel mit Innentiegel aus Kieselglas umgegossen und bei Temperaturen von 1600 °C über 60 Minuten durch Rühren homogenisiert. Nach dieser Homogenisierung wurden die Gläser für 3 Stunden bei 1640 °C geläutert.

Anschließend wurden Stücke von ca. 120 x 140 x 30 mm³ Größe gegossen und in einem Kühlofen beginnend ab 660 °C auf Raumtemperatur abgekühlt, um Spannungen abzubauen. Die Gussstücke wurden in die für die Untersuchungen und für die Keramisierung benötigten Größen unterteilt.

Tabelle 2 zeigt die Eigenschaften der kristallisierbaren Gläser nach Umwandlung in die transparente Glaskeramik mit Hochquarz-Mischkristallen als Hauptkristallphase.

In Tabelle 2 sind die Eigenschaften der Glaskeramiken, nämlich spektrale Transmission [%] bei 400 nm, Infrarottransmission [%] bei 1600 nm, thermische Ausdehnung zwischen 20 °C und 700°C [$10^{-6}$/K], und der mittels Röntgenbeugung gemessene Phasengehalt [Gew.-%] der Hauptkristallphase, bestehend aus Hochquarz-Mischkristallen, der Phasengehalt der Restglasphase, sowie die mittlere Kristallitgröße [nm] aufgezeigt. In der Tabelle 2 sind auch die in Transmission gemessene Helligkeit Y aus dem CIE-Farbsystem und die Helligkeit L* sowie die Farbkoordinaten a*, b* aus dem CIELAB-System mit der Größe c* als Maß für die Farbe (Buntheit) sowie der haze-Wert als Maß für die Streuung angegeben.

Die Transmissionsmessungen wurden an polierten Platten der Dicke 4 mm mit Normlicht D65, 2° mit dem Gerät Perkin-Elmer Lambda 900 durchgeführt. Aus den gemessenen spektralen Werten im Bereich zwischen 380 nm und 780 nm, der das sichtbare Lichtspektrum repräsentiert, wird die Helligkeit Y nach DIN 5033 für die gewählte Normlichtart D65 und Beobachterwinkel 2° berechnet. Aus diesen Messungen werden ebenfalls die Helligkeit L* und die Farbkoordinaten a*, b* aus dem CIELAB-System und die Buntheit c* berechnet.

Auch die Messung der Remission erfolgte nach DIN 5033 mit diesen Parametern. Die Größe L* in Remission korreliert mit dem Weißeindruck der Glaskeramik.

Der Haze-Wert wird nach ASTM D1003-13 mit Normlicht C,2° an 4 mm dicken polierten Proben der LAS-Glaskeramik mit dem Messgerät haze-guard der Firma BYK Gardner gemessen.

Tabelle 2 enthält weiterhin die $L_T^*$ - und $c_T^*$ -Werte für die erfindungsgemäßen Glaskeramiken, die aus den Gläsern 1 - 11 mittels eines Keramisierungsprogramms 1 hergestellt wurden. Bei den Vergleichsgläsern 12 - 17 wurde außer dem Keramisierungsprogramm 1 ein Keramisierungsprogramm 2 eingesetzt.

Keramisierungsprogramme

Bei einem Keramisierungsprogramm 1 wird in einem Laborofen, der hohe Heizraten ermöglicht in 24 min auf 720 °C aufgeheizt. In dem Temperaturbereich von 720 °C bis 800 °C wird die Heizrate für ausreichende Keimbildung verringert, damit keine visuell störende Streuung auftritt.

Oberhalb 800 °C bis zur Maximaltemperatur 890 °C wird die Heizrate weiter verringert, da in diesem Bereich die Kristallisation der Hochquarz-Mischkristalle stattfindet. Der damit einhergehende Schrumpfungsprozess darf nicht zu schnell ablaufen, da es sonst zu Unebenheiten des Artikels kommen kann. In diesem Temperaturbereich ist auch die Bildung der störenden Fe/Ti- und Sn/Ti-Farbkomplexe verstärkt. Die Gesamtzeit von 800 °C bis Erreichen der Maximaltemperatur 890 °C beträgt 53 min, mit anschließender Haltezeit 10 min. Bei der Maximaltemperatur wird die Zusammensetzung von Kristallen und Restglas eingestellt und die Mikrostruktur homogenisiert. Dabei werden die chemischen und physikalischen Eigenschaften der Glaskeramik eingestellt. Das Abkühlen erfolgt bis 600 °C gesteuert, dann wird die Probe auf Raumtemperatur durch Öffnen der Ofentür abgeschreckt.

Keramisierungsprogramm 1, (Keramisierungszeit 136 min):

a) schnelles Aufheizen von Raumtemperatur auf $T_a$ = 720 °C in 24 min,
b) Temperaturerhöhung von $T_a$ = 720 °C bis 800 °C in 20 min (Heizrate 4 °C/min),
c) Temperaturerhöhung von 800 °C bis 890 °C in 53 min (Heizrate 1,7 °C/min),
d) Haltezeit von 10 min bei einer Maximaltemperatur von 890°C,
e) Abkühlen innerhalb von 29 min von 890 °C auf 600 °C (mit 10 °C/min), dann schnelle Abkühlung auf Raumtemperatur.

Bei einem Keramisierungsprogramm 2 ist die Keramisierungszeit insgesamt verkürzt und die Keimbildungszeit verlängert. Bei dem Keramisierungsprogramm 2 wird bis zu einer Temperatur von 720 °C im Keramisierungsofen in 24 min aufgeheizt. In dem Temperaturbereich von 720 °C bis 800 °C wird die Heizrate für ausreichende Keimbildung weiter verringert, damit keine visuell störende Streuung auftritt. Die Gesamtzeit zwischen 720 °C bis 800 °C beträgt 33 min. Oberhalb von 800 °C erfolgt die Kristallisation der gewünschten Hochquarz-Mischkristallphase. Die Gesamtzeit von 800°C bis Erreichen der Maximaltemperatur 885 °C beträgt 28 min. Bei der Maximaltemperatur von 885 °C, Haltezeit 10 min, wird die Zusammensetzung von Kristallen und Restglas eingestellt und die Mikrostruktur homogenisiert. Das Abkühlen erfolgt bis 800°C gesteuert in 10 min mit einer Kühlrate von 8,5 °C/min, dann wird die Probe auf Raumtemperatur durch Öffnen der Ofentür abgeschreckt; also zusammengefasst:

Keramisierungsprogramm 2 (Keramisierungszeit 105 min):

a) schnelles Aufheizen von Raumtemperatur auf $T_a$ = 720 °C in 24 min (Heizrate 30 °C/min),
b) Temperaturerhöhung von $T_a$ = 720 bis 800 °C in 33 min (Heizrate 2,4 °C/min),
c) Temperaturerhöhung von 800 auf 885°C innerhalb von 28 min, dabei Aufheizen mit 1°C/min auf 820°C, weiteres Aufheizen mit 8°C/min auf 885°C;
d) Haltezeit 10 min bei Maximaltemperatur 885°C,
e) Abkühlen auf 800°C innerhalb 10 min, dann schnelle Abkühlung auf Raumtemperatur.

Das Vergleichsbeispiel 16 entspricht dem Beispiel 1 aus Tabelle 2 in der im Stand der Technik diskutierten Schrift EP 1 837 314 A und ist wie darin angegeben kristallisiert worden.

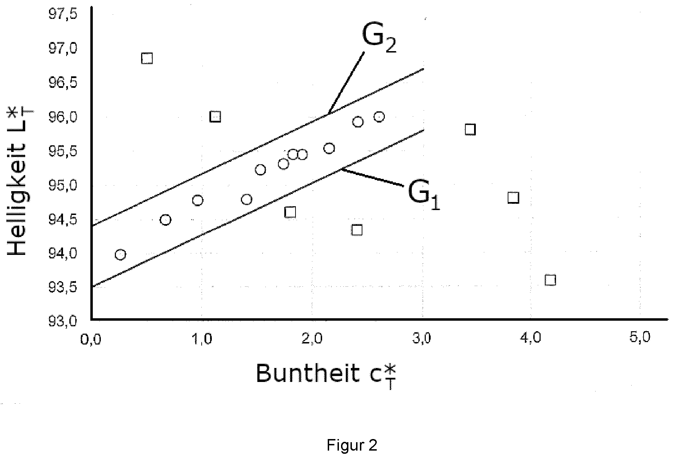

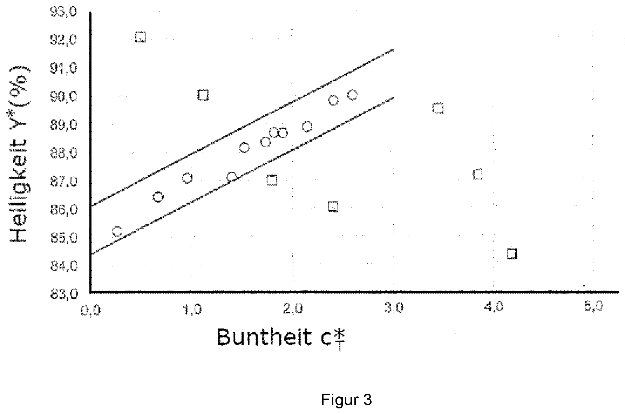

Die Ergebnisse aus Tabelle 2 sind in der Figur 2 für L* in Abhängigkeit von $c_T^*$ und in Figur 3 für Y* in Abhängigkeit von $c_T^*$ dargestellt.

Für die Gerade G₁ gilt: $G_1 = 0{,}765 \cdot c_T^* + 93{,}5$ .

G₁ beschreibt eine bevorzugte Grenzgerade für den Bereich der Bedingung B1.

Für die Gerade G₂ gilt: $G_2 = 0{,}765 \cdot c_T^* + 94{,}4$ .

G₂ beschreibt eine obere Grenzgerade für den Bereich der Bedingung B1. Beide Grenzgeraden G₁ und G₂ beschreiben einen bevorzugten Korridor für die Helligkeit $L_T^*$ der Glaskeramikplatte 2.

Tabelle 3 enthält die $\Delta E_{Rc,R}$-Werte für die erfindungsgemäßen Glaskeramiken 1 - 11 und die Vergleichsbeispiele 12 - 17 bzw. das Vergleichsglas 18.

Die Unterseitenbeschichtungen werden als A, B, C und D bezeichnet. Die vier Unterseitenbeschichtungen unterscheiden sich in der farbgebenden ersten Lage 9a. Die Materialien der ersten Lage sind in Tabelle 4 zusammengestellt.

Die Vorteile der erfindungsgemäßen transparenten Glaskeramik hinsichtlich ihrer geringen Buntheit $C_T^*$ und hohen Helligkeit $L_T^*$ gemäß dem bevorzugten Wertebereich kommen bei Kochflächen mit Unterseitenbeschichtung besonders dann zum Tragen, wenn es sich um weiße, allgemein helle Unterseitenbeschichtungen handelt. Bevorzugt sind helle Unterseitenbeschichtungen, die gemäß der angegebenen Rechenvorschrift in Remission eine Helligkeit $L_{Rc}^*$ von größer als 50, weiter bevorzugt größer als 60 und besonders bevorzugt größer 70 haben. Die Buntheit c* der Unterseitenbeschichtung beträgt bevorzugt weniger als 10, bevorzugt weniger als 8. Die Werte für die Helligkeit $L_{Rc}^*$ und die Farbkoordinaten a* und b* der Unterseitenbeschichtung sind in Tabelle 3 dargestellt. Demzufolge handelt es sich bei den Unterseitenbeschichtungen B, C und D um bevorzugte Beispiele. Bei Unterseitenbeschichtungen mit mehreren Lagen, wie in Figur 1 dargestellt, beziehen sich die Größen auf die farbgebende Lage, die im Kontakt mit der Glaskeramikplatte ist (erste Lage 9a in Figur 1).

Ein bevorzugtes Kochfeld ist eine Kochfläche mit Induktionsbeheizung, wobei die Glaskeramikplatte über die erfindungsgemäßen Werte für Buntheit $C_T^*$ und Helligkeit $L_T^*$, bzw. Y (siehe auch Figur 2 oder 3) verfügt und eine Unterseitenbeschichtung mit $L_{Rc}^* > 50$ und Buntheit c* < 10 aufweist.

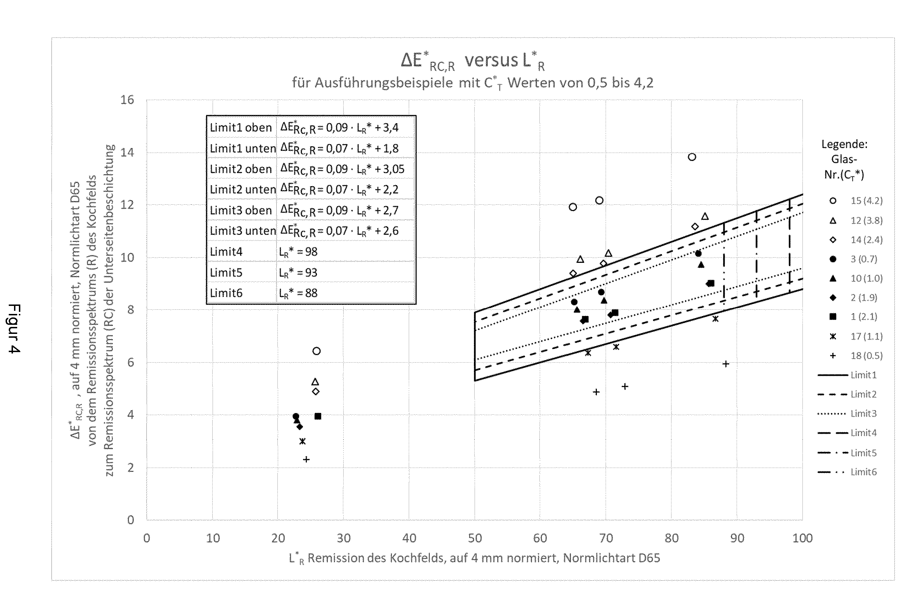

Die Kochfläche besitzt bei Betrachtung in Remission durch die Glaskeramikplatte hindurch bevorzugt eine Helligkeit $L_R^* > 50$, weiter bevorzugt größer als 55 und besonders bevorzugt größer als 60. Beispiele und Werte für $L_R^*$ sind Tabelle 3 und der Figur 4 zu entnehmen.

Tabelle 1: Zusammensetzung und Eigenschaften kristallisierbarer Gläser

| Glas Nr. | | 1 | 2 | 3 | 4 | 5 | 6 | 7 | 8 |
|---|---|---|---|---|---|---|---|---|---|
| Zusammensetzung | Gew. % | | | | | | | | |
| Li$_2$O | | 3,60 | 3,66 | 3,68 | 3,62 | 3,63 | 3,60 | 3,53 | 3,64 |
| Na$_2$O | | 0,51 | 0,52 | 0,52 | 0,52 | 0,53 | 0,65 | 0,46 | 0,22 |
| K$_2$O | | 0,16 | 0,20 | 0,20 | 0,20 | 0,20 | 0,12 | 0,38 | 0,28 |
| MgO | | 0,28 | 0,27 | 0,27 | 0,27 | 0,27 | 0,18 | 0,13 | 0,27 |
| CaO | | 0,40 | 0,34 | 0,34 | 0,34 | 0,35 | 0,04 | 0,17 | 0,32 |
| SrO | | 0,05 | 0,05 | 0,05 | 0,05 | 0,05 | 0,19 | 0,11 | 0,05 |
| BaO | | 0,92 | 0,93 | 0,93 | 0,93 | 0,93 | 1,45 | 1,45 | 0,95 |
| ZnO | | 1,77 | 1,83 | 1,84 | 1,81 | 1,80 | 1,85 | 1,71 | 1,80 |
| Al$_2$O$_3$ | | 21,45 | 21,28 | 21,23 | 21,25 | 21,28 | 21,67 | 21,59 | 21,23 |
| SiO$_2$ | | 65,75 | 65,70 | 65,60 | 65,70 | 65,70 | 65,10 | 65,30 | 66,07 |
| TiO$_2$ | | 2,35 | 2,39 | 2,40 | 2,39 | 2,40 | 2,45 | 2,47 | 2,41 |
| ZrO$_2$ | | 1,81 | 1,82 | 1,82 | 1,82 | 1,82 | 1,75 | 1,75 | 1,83 |
| P$_2$O$_5$ | | 0,03 | 0,028 | 0,028 | 0,030 | 0,030 | | 0,028 | 0,029 |
| SnO$_2$ | | | | | | | | | |
| Fe$_2$O$_3$ | | 0,015 | 0,014 | 0,014 | 0,015 | 0,014 | 0,009 | 0,010 | 0,015 |
| Nd$_2$O$_3$ | | 0,048 | 0,053 | 0,16 | 0,160 | 0,110 | | 0,067 | 0,055 |
| As$_2$O$_3$ | | 0,85 | 0,86 | 0,86 | 0,88 | 0,87 | 0,88 | 0,81 | 0,82 |
| CoO | | | | | 0,0012 | | | | |
| H$_2$O - Gehalt (β-OH) | | | 0,33 | 0,34 | | | 0,30 | 0,29 | 0,37 |
| MgO / As$_2$O$_3$ | | 0,33 | 0,31 | 0,31 | 0,31 | 0,31 | 0,20 | 0,16 | 0,33 |
| Na$_2$O + K$_2$O | | 0,67 | 0,72 | 0,72 | 0,72 | 0,73 | 0,77 | 0,84 | 0,50 |
| CaO+SrO | | 0,45 | 0,39 | 0,39 | 0,39 | 0,40 | 0,23 | 0,28 | 0,37 |

(fortgesetzt)

| Glas Nr. | | 1 | 2 | 3 | 4 | 5 | 6 | 7 | 8 |
|---|---|---|---|---|---|---|---|---|---|
| Zusammensetzung | Gew. % | | | | | | | | |
| SrO + BaO | | 0,97 | 0,98 | 0,98 | 0,98 | 0,98 | 1,64 | 1,56 | 1,00 |
| $TiO_2 + ZrO_2 + SnO_2$ | | 4,16 | 4,21 | 4,22 | 4,21 | 4,22 | 4,20 | 4,22 | 4,24 |
| $Na_2O + K_2O + CaO + SrO + BaO$ | | 2,04 | 2,04 | 2,04 | 2,04 | 2,06 | 2,45 | 2,57 | 1,82 |
| Eigenschaften glasig | | | | | | | | | |
| Transformationstemperatur Tg | °C | | 683 | 678 | 678 | | 681 | 689 | 685 |
| $10^2$ - Temperatur | °C | | 1741 | 1736 | 1732 | | 1746 | 1749 | 1742 |
| Verarbeitungstemperatur VA | °C | | 1313 | 1309 | 1310 | | 1312 | 1321 | 1316 |
| OEG-Temperatur | °C | | 1285 | 1280 | | | 1300 | 1300 | 1275 |
| Entglasungsfestigkeit VA - OEG | °C | | 28 | 29 | | | 12 | 21 | 41 |

Fortsetzung Tabelle 1: Zusammensetzung und Eigenschaften kristallisierbarer Gläser

| | | | | | Vergleichsbeispiele | | |
|---|---|---|---|---|---|---|---|
| Glas Nr. | | 9 | 10 | 11 | 12 | 13 | 14 |
| Zusammensetzung | Gew.% | | | | | | |
| $Li_2O$ | | 3,63 | 3,68 | 3,70 | 3,70 | 3,71 | 3,71 |
| $Na_2O$ | | 0,15 | 0,14 | 0,14 | 0,16 | 0,37 | 0,53 |
| $K_2O$ | | 0,35 | 0,33 | 0,33 | 0,21 | 0,29 | 0,16 |
| MgO | | 0,32 | 0,32 | 0,32 | 1,07 | 0,71 | 0,28 |
| CaO | | 0,33 | 0,30 | 0,31 | 0,03 | 0,02 | 0,40 |
| SrO | | 0,05 | 0,05 | 0,05 | 0,01 | 0,01 | 0,05 |
| BaO | | 0,98 | 0,98 | 0,98 | 0,84 | 1,17 | 0,93 |
| ZnO | | 1,83 | 1,81 | 1,81 | 1,60 | | 1,76 |
| $Al_2O_3$ | | 21,19 | 21,25 | 21,25 | 20,12 | 21,80 | 21,65 |
| $SiO_2$ | | 66,00 | 65,90 | 66,00 | 67,12 | 65,34 | 66,16 |
| $TiO_2$ | | 2,43 | 2,41 | 2,42 | 2,35 | 2,11 | 2,36 |
| $ZrO_2$ | | 1,83 | 1,83 | 1,83 | 1,81 | 2,24 | 1,83 |
| $P_2O_5$ | | 0,029 | 0,030 | 0,029 | 0,026 | 1,47 | 0,03 |
| $SnO_2$ | | | | | | | 0,069 |
| $Fe_2O_3$ | | 0,016 | 0,015 | 0,014 | 0,018 | 0,015 | 0,013 |
| $Nd_2O_3$ | | 0,055 | 0,120 | | 0,062 | | 0,052 |
| $As_2O_3$ | | 0,8 | 0,81 | 0,79 | 0,86 | 0,75 | |
| CoO | | | | | | | |
| $H_2O$ - Gehalt (β-OH) | | 0,36 | 0,30 | | 0,48 | | 0,47 |
| $MgO / As_2O_3$ | | 0,40 | 0,40 | 0,41 | 1,24 | 0,95 | |
| $Na_2O + K_2O$ | | 0,50 | 0,47 | 0,47 | 0,37 | 0,66 | 0,69 |
| CaO+SrO | | 0,38 | 0,35 | 0,36 | 0,05 | 0,03 | 0,45 |
| SrO + BaO | | 1,03 | 1,03 | 1,03 | 0,85 | 1,18 | 0,98 |
| $TiO_2 + ZrO_2 + SnO_2$ | | 4,26 | 4,24 | 4,25 | 4,16 | 4,35 | 4,26 |

(fortgesetzt)

| Glas Nr. | | | | | Vergleichsbeispiele | | |
|---|---|---|---|---|---|---|---|
| | | 9 | 10 | 11 | 12 | 13 | 14 |
| Zusammensetzung | Gew.% | | | | | | |
| Na$_2$O + K$_2$O + CaO + SrO + BaO | | 1,86 | 1,80 | 1,81 | 1,26 | 1,86 | 2,07 |
| Eigenschaften glasig | | | | | | | |
| Transformationstemperatur Tg | °C | 686 | 682 | 676 | 674 | 698 | 683 |
| 10$^2$ - Temperatur | °C | 1741 | 1741 | 1740 | 1760 | 1756 | 1747 |
| Verarbeitungstemperatur VA | °C | 1311 | 1312 | 1313 | 1315 | 1332 | 1318 |
| OEG-Temperatur | °C | 1275 | 1290 | | 1280 | | 1290 |
| Entglasungsfestigkeit VA - OEG | °C | 36 | 22 | | 35 | | 28 |

Fortsetzung Tabelle 1: Zusammensetzung und Eigenschaften kristallisierbarer Gläser

| Glas Nr. | | Vergleichsbeispiele | | |
|---|---|---|---|---|
| | | 15 | 16 | 17 |
| Zusammensetzung | Gew.% | | | |
| Li$_2$O | | 3,66 | 3,75 | 4,11 |
| Na$_2$O | | 0,56 | 0,35 | |
| K$_2$O | | 0,10 | 0,13 | |
| MgO | | 0,61 | 0,65 | 1,33 |
| CaO | | 0,24 | | |
| SrO | | 0,49 | | |
| BaO | | 0,52 | | |
| ZnO | | 1,76 | 1,57 | |
| Al$_2$O$_3$ | | 21,58 | 21,3 | 18,2 |
| SiO$_2$ | | 66,19 | 67,6 | 72,16 |
| TiO$_2$ | | 2,21 | 2,23 | |
| ZrO$_2$ | | 1,83 | 1,76 | 3,69 |
| P$_2$O$_5$ | | 0,02 | | |
| SnO$_2$ | | 0,120 | | |
| Fe$_2$O$_3$ | | 0,015 | 0,020 | |
| Nd$_2$O$_3$ | | 0,054 | 0,090 | |
| As$_2$O$_3$ | | 0,0052 | 0,40 | 0,31 |
| CoO | | | | |
| H$_2$O - Gehalt (β-OH) | | 0,45 | | |
| MgO / As$_2$O$_3$ | | 117,3 | 1,63 | 4,29 |
| Na$_2$O + K$_2$O | | 0,66 | 0,48 | 0,00 |
| CaO+SrO | | 0,73 | 0,00 | 0,00 |
| SrO + BaO | | 1,01 | 0,00 | 0,00 |
| TiO$_2$ + ZrO$_2$ + SnO$_2$ | | 4,16 | 3,99 | 3,69 |
| Na$_2$O + K$_2$O + CaO + SrO + BaO | | 1,91 | 0,48 | 0,00 |

(fortgesetzt)

| | | Vergleichsbeispiele | | |
|---|---|---|---|---|
| Glas Nr. | | 15 | 16 | 17 |
| Zusammensetzung | Gew.% | | | |
| Eigenschaften glasig | | | | |
| Transformationstemperatur Tg | °C | 684 | 681 | 733 |
| $10^2$ - Temperatur | °C | 1736 | | 1376 |
| Verarbeitungstemperatur VA | °C | 1309 | 1320 | 1376 |
| OEG-Temperatur | °C | 1250 | 1240 | > 1470 |
| Entglasungsfestigkeit VA - OEG | °C | 59 | 80 | > 96 |

Tabelle 2: Keramisierungsbedingungen und Eigenschaften der Glaskeramiken mit Hochquarz-Mischkristallen als Hauptkristallphase

| Beispiel Nr. | | 1 | 2 | 3 | 4 | 5 | 6 | 7 | 8 | 9 |
|---|---|---|---|---|---|---|---|---|---|---|
| Glas Nr. | | 1 | 2 | 3 | 4 | 5 | 6 | 7 | 8 | 9 |
| Keramisierungsprogramm | | 1 | 1 | 1 | 1 | 1 | 1 | 1 | 1 | 1 |
| **Transmission Normlicht D65, 2° 4 mm Dicke** | | | | | | | | | | |
| 400 nm | % | 79,1 | 79,4 | 78,7 | 78,3 | 78,4 | 80,9 | 80,6 | 79,6 | 79,6 |
| 1600 nm | % | 90,5 | 90,1 | 89,9 | 89,6 | 90,1 | 90,9 | 90,7 | 89,6 | 89,6 |
| Lichttransmission Y | % | 88,9 | 88,7 | 86,4 | 85,2 | 87,1 | 89,8 | 88,2 | 88,4 | 88,7 |
| $L_T^*$ | | 95,5 | 95,4 | 94,5 | 94,0 | 94,8 | 95,9 | 95,2 | 95,3 | 95,5 |
| $a_T^*$ | | -0,4 | -0,3 | -0,3 | 0,2 | -0,3 | -0,3 | -0,3 | -0,3 | -0,3 |
| $b_T^*$ | | 2,1 | 1,9 | 0,6 | 0,2 | 1,4 | 2,4 | 1,5 | 1,7 | 1,8 |
| $c_T^*$ | | 2,1 | 1,9 | 0,7 | 0,3 | 1,4 | 2,4 | 1,5 | 1,7 | 1,8 |
| **Streuung Normlicht C, 2° 4 mm Dicke** | | | | | | | | | | |
| haze | % | 0,69 | 0,51 | 1,02 | 0,65 | 0,56 | 0,37 | 0,43 | 0,68 | 0,55 |
| **therm Ausdehnung** $\alpha_{20/700}$ | $10^{-6}/$K | -0,30 | -0,30 | -0,27 | -0,28 | -0,31 | -0,25 | -0,20 | -0,41 | -0,37 |
| **Röntgenbeugung** | | | | | | | | | | |
| HQMK-Phasengehalt | % | 71 | 69 | 71 | 70 | 70 | 68 | 65 | 72 | 72 |
| Phasengehalt Restglasphase | % | 26 | 28 | 26 | 27 | 27 | 29 | 32 | 25 | 25 |
| mittlere Kristallitgröße | nm | 41 | 40 | 41 | 40 | 41 | 38 | 37 | 37 | 38 |

Fortsetzung Tabelle 2: Keramisierungsbedingungen und Eigenschaften der Glaskeramiken mit Hochquarz-Mischkristallen als Hauptkristallphase

| | | | | Vergleichsbeispiele | | | | | | |
|---|---|---|---|---|---|---|---|---|---|---|
| Beispiel Nr. | | 10 | 11 | 12 | 13 | 14 | 15 | 16 | 17 | 18 |
| Glas Nr. | | 10 | 11 | 12 | 13 | 14 | 15 | 16 | 17 | 18 |
| Keramisierungsprogramm | | 1 | 1 | 1 | 1 | 1 | 1 | Im Text | 2 | Glas zum Vergleich |
| Transmission Normlicht D65, 2° 4 mm Dicke | | | | | | | | | | |
| 400 nm | % | 79,2 | 79,7 | 67,9 | 77,4 | 76,4 | 65,7 | | 84,7 | 91,0 |
| 1600 nm | % | 89,8 | 90,4 | 89,6 | 88,7 | 89.7 | 89,8 | | 89,0 | 91,0 |
| Lichttransmission Y | % | 87,1 | 90,0 | 87,2 | 89,5 | 86,0 | 84,3 | 87,0 | 90,0 | 92,1 |
| L* | | 94,8 | 96,0 | 94,8 | 95,8 | 94,3 | 93,6 | 94,6 | 96,0 | 96,9 |
| a* | | -0,3 | -0,3 | -0,5 | -0,5 | 0,0 | -0,2 | -0,5 | -0,2 | -0,3 |
| b* | | 0,9 | 2,6 | 3,8 | 3,4 | 2,4 | 4,2 | 1,8 | 1,1 | 0,4 |
| c* | | 1,0 | 2,6 | 3,8 | 3,4 | 2,4 | 4,2 | 1,8 | 1,1 | 0,5 |
| Streuung Normlicht C, 2° 4 mm Dicke | | | | | | | | | | |
| haze | % | 0,75 | 1,07 | 0,39 | 0,54 | 0,51 | 0,62 | 0,28 | 1,12 | |
| therm Ausdehnung $\alpha_{20/700}$ | $10^{-6}$/K | -0,38 | -0,41 | -0,01 | | -0,26 | -0,11 | -0,26 | | 0,40 |
| Röntgenbeugung | | | | | | | | | | |
| HQMK-Phasengehalt | % | 70 | | 76 | | 68 | 72 | | 80 | |
| Phasengehalt Restglasphase | % | 27 | | 21 | | 29 | 25 | | 17 | |
| mittlere Kristallitgröße | nm | 37 | | 40 | | 37 | 41 | | 73 | |

Tabelle 3:

| Glas-Nr. | 1 | 1 | 1 | 1 | 2 | 2 | 2 | 2 | 3 | 3 | 3 | 3 |
|---|---|---|---|---|---|---|---|---|---|---|---|---|
| Unterseitenbeschichtung | A | B | C | D | A | B | C | D | A | B | C | D |
| $C_T$* Glaskeramik | 2,1 | 2,1 | 2,1 | 2,1 | 1,9 | 1,9 | 1,9 | 1,9 | 0,7 | 0,7 | 0,7 | 0,7 |
| $L_{RC}$* Unterseitenbeschichtung | 26,6 | 73,3 | 77,9 | 94,2 | 26,6 | 73,3 | 77,9 | 94,2 | 26,6 | 73,3 | 77,9 | 94,2 |
| a* Unterseitenbeschichtungt | 0,26 | -1,1 | -0,6 | -0,6 | 0,26 | -1,1 | -0,6 | -0,6 | 0,26 | -1,1 | -0,6 | -0,6 |
| b* Unterseitenbeschichtung | -0,5 | -4,1 | -0,6 | 3,1 | -0,5 | -4,1 | -0,6 | 3,1 | -0,5 | -4,1 | -0,6 | 3,1 |
| $L_R$* Kochfläche | 26,1 | 66,8 | 71,4 | 86,0 | 23,3 | 66,5 | 70,7 | 85,7 | 22,7 | 65,2 | 69,3 | 84,1 |
| a* Kochfläche | 0,15 | -1,49 | -1,00 | -0,88 | 0,04 | -1,47 | -1,03 | -0,86 | 0,04 | -1,43 | -1,05 | -0,89 |
| b* Kochfläche | -0,98 | -0,88 | 2,36 | 6,46 | 0,87 | -0,91 | 2,39 | 6,12 | 0,02 | -2,64 | 0,50 | 3,89 |
| $\Delta E_{Rc,R}$ | 3,9 | 7,6 | 7,9 | 9,0 | 3,6 | 7,6 | 7,8 | 9,0 | 3,9 | 8,3 | 8,7 | 10,1 |

| Glas-Nr. | **10** | **10** | **10** | **10** | **12** | **12** | **12** | **12** | **14** | **14** | **14** | **14** |
|---|---|---|---|---|---|---|---|---|---|---|---|---|
| Unterseitenbeschichtung | A | B | C | D | A | B | C | D | A | B | C | D |
| $C_T^*$ Glaskeramik | 1,0 | 1,0 | 1,0 | 1,0 | 3,8 | 3,8 | 3,8 | 3,8 | 2,4 | 2,4 | 2,4 | 2,4 |
| $L_{RC}^*$ Unterseitenbeschichtung | 26,6 | 73,3 | 77,9 | 94,2 | 26,6 | 73,3 | 77,9 | 94,2 | 26,6 | 73,3 | 77,9 | 94,2 |
| a* Unterseitenbeschichtung | 0,26 | -1,1 | -0,6 | -0,6 | 0,26 | -1,1 | -0,6 | -0,6 | 0,26 | -1,1 | -0,6 | -0,6 |
| b* Unterseitenbeschichtung | -0,5 | -4,1 | -0,6 | 3,1 | -0,5 | -4,1 | -0,6 | 3,1 | -0,5 | -4,1 | -0,6 | 3,1 |
| $L_R^*$ Kochfläche | 22,9 | 65,5 | 69,7 | 84,5 | 25,6 | 66,1 | 70,4 | 85,1 | 25,7 | 64,9 | 69,6 | 83,6 |
| a* Kochfläche | 0,06 | -1,40 | -1,01 | -0,84 | 0,01 | -1,63 | -1,06 | -0,90 | 0,14 | -0,88 | -0,39 | -0,12 |
| b* Kochfläche | 0,22 | -2,25 | 0,94 | 4,42 | -0,51 | 1,61 | 4,95 | 8,73 | -0,47 | 0,01 | 3,00 | 6,89 |
| $\Delta E_{Rc,R}$ | 3,8 | 8,0 | 8,4 | 9,7 | 5,3 | 9,9 | 10,2 | 11,6 | 4,9 | 9,4 | 9,8 | 11,2 |

Fortsetzung Tabelle 3:

| Glas-Nr. | 15 | 15 | 15 | 15 | 17 | 17 | 17 | 17 | 18 | 18 | 18 | 18 |
|---|---|---|---|---|---|---|---|---|---|---|---|---|
| Unterseitenbeschichtung | A | B | C | D | A | B | C | D | A | B | C | D |
| $C_T^*$ Glaskeramik | 4,2 | 4,2 | 4,2 | 4,2 | 1,1 | 1,1 | 1,1 | 1,1 | 0,5 | 0,5 | 0,5 | 0,5 |
| $L_{RC}^*$ Unterseitenbeschichtung | 26,6 | 73,3 | 77,9 | 94,2 | 26,6 | 73,3 | 77,9 | 94,2 | 26,6 | 73,3 | 77,9 | 94,2 |
| $a^*$ Unterseitenbeschichtung | 0,26 | -1,1 | -0,6 | -0,6 | 0,26 | -1,1 | -0,6 | -0,6 | 0,26 | -1,1 | -0,6 | -0,6 |
| $b^*$ Unterseitenbeschichtung | -0,5 | -4,1 | -0,6 | 3,1 | -0,5 | -4,1 | -0,6 | 3,1 | -0,5 | -4,1 | -0,6 | 3,1 |
| $L_R^*$ Kochfläche | 25,8 | 64,9 | 68,9 | 83,1 | 23,7 | 67,3 | 71,5 | 86,7 | 24,3 | 68,5 | 72,9 | 88,3 |
| $a^*$ Kochfläche | 0,19 | -1,09 | -0,57 | -0,21 | 0,13 | -1,24 | -0,82 | -0,70 | 0,04 | -1,45 | -1,06 | -1,04 |
| $b^*$ Kochfläche | -0,90 | 1,53 | 4,87 | 9,08 | 0,32 | -2,12 | 1,20 | 4,80 | -0,19 | -3,22 | 0,10 | 3,62 |
| $\Delta E_{Rc,R}$ | 6,4 | 11,9 | 12,2 | 13,8 | 3,0 | 6,4 | 6,6 | 7,7 | 2,3 | 4,9 | 5,1 | 5,9 |

EP 4 026 813 B1

Tabelle 4: Materialien der ersten Lage

| Rezeptur der Farbpasten A-C, bspw. Im Sol-Gel-Verfahren aufgebracht. | Silikonmatrix | Füllstoffe | Lösungsmittel | Farbpigmente | | | | | | | |
|---|---|---|---|---|---|---|---|---|---|---|---|
| | bspw. Methyl-Silikonharz | Bspw. $SiO_2$ | | Glimmerpigment mit $TiO_2$ + $SnO_2$ beschichtet (weiß) | Glimmerpigment mit $TiO_2$ + $SnO_2$ beschichtet (silber) | $TiO_2$ (weiß) | Absorptionspigment violett | Absorptionspigment blau | Schwarz Pigment | Graphit Pigment |
| A | 50,0% | | 10,0% | | 2,0% | | | | 30,0% | 8,0% |
| B | 58,0% | 4,0% | 10,0% | 10,0% | 10,0% | 3,0% | 1,5% | 1,5% | | 2,0% |
| C | 65,0% | 2,0% | 10,0% | 22,0% | | | | | | 1,0% |
| D | Farbe, RAL 9003 (weiß) | | | | | | | | | |

**Bezugszeichenliste**

1 Kochfläche
2 Glaskeramikplatte
4 Oberseite
6 Unterseite
8 Unterseitenbeschichtung
9a erste Lage
9b zweite Lage
10 einfallender Lichtstrahl
12 reflektierter Lichtstrahl (Remission)

Liste der Bedingungen

$$L_T^* \geq a \cdot c_T^* + b \quad \text{(Bedingung B1)}$$

mit

$$a \geq 0{,}765, \text{ mit } b \geq 93{,}5 \text{ und mit } 0 \leq c_T^* \leq 3$$

$$Y^* \geq d \cdot c^* + e \quad \text{(Bedingung B1a)}$$

$$0{,}765 \cdot c^* + 94{,}4 \geq L_T^* \geq 0{,}765 \cdot c_T^* + 93{,}5 \quad \text{(Bedingung B2)}$$

$$0{,}07 \cdot L_R^* + 1{,}8 \leq \Delta E_{Rc,\,R}^* \leq 0{,}09\, L_R^* + 3{,}4 \quad \text{(Bedingung B3)}$$

$$50\% \leq L_R^* \leq 100\% \quad \text{(Bedingung B4)}$$

$$0{,}5\ \text{Gew.-}\% \leq SrO + BaO \leq 2{,}5\ \text{Gew.-}\% \quad \text{(Bedingung B5)}$$

$$MgO\ /\ As_2O_3 < 0{,}8 \quad \text{(Bedingung B6)}$$

$$MgO\ /\ As_2O_3 < 0{,}7 \quad \text{(Bedingung B6a)}$$

$$0{,}2\ \text{Gew.-}\% \leq Na_2O + K_2O \leq 1{,}5\ \text{Gew.-}\% \quad \text{(Bedingung B7a)}$$

$$0{,}2\ \text{Gew.-}\% \leq Na_2O + K_2O \leq 1{,}2\ \text{Gew.-}\% \quad \text{(Bedingung B7b)}$$

$$3{,}8\ \text{Gew.-}\% \leq TiO_2 + ZrO_2 + SnO_2 \leq 4{,}8\ \text{Gew.-}\% \quad \text{(Bedingung B8)}$$

**Patentansprüche**

1. Kochfläche (1) aus einer transparenten Lithiumaluminiumsilikat-Glaskeramikplatte (2) die eine Oberseitenfläche (4) und eine Unterseitenfläche (6) aufweist, wobei die Unterseitenfläche (6) mindestens teilweise mit einer Unterseitenbeschichtung (8) versehen ist, **dadurch gekennzeichnet,**

**dass** die Glaskeramik Hochquarz-Mischkristalle als Hauptkristallphase enthält,

**dass** die Glaskeramikplatte (2) mit einer Dicke von 4 mm bei Durchtritt von Licht der Normlichtart D65 eine Buntheit $C_T^*$ von höchstens 3 aufweist,

**dass** die Glaskeramikplatte $TiO_2$ als Keimbildner aufweist,

**dass** die Kochfläche (1) einen Farbort A mit den Farbkoordinaten ($L_R^*$, $a_R^*$, $b_R^*$) im CIELAB-Farbraum aufweist, der in Remission mit Licht der Normlichtart D65 gemessen wird,

**dass** die Unterseitenbeschichtung (8) einen Farbort B mit den Farbkoordinaten ($L_{Rc}^*$, $a_{Rc}^*$, $b_{Rc}^*$) im CIELAB-Farbraum aufweist,

**dass** die Farborte A und B einen Abstand $\Delta E_{Rc,R}^*$ aufweisen mit:

$$\Delta E_{Rc,R}^* = \sqrt{\left(L_{Rc}^* - L_R^*\right)^2 + \left(a_{Rc}^* - a_R^*\right)^2 + \left(b_{Rc}^* - b_R^*\right)^2}$$

und **dass** für den Abstand $\Delta E_{Rc,\,R}^*$ gilt:

$$0,07 \cdot L_R^* + 1,8 \leq \Delta E_{Rc,\,R}^* \leq 0,09\,L_R^* + 3,4 \text{ (Bedingung B3)}$$

wobei die Farbkoordinate $L_R^*$ in % die Helligkeit der Kochfläche (1) bezeichnet, die in Remission mit Licht der Normlichtart D65 gemessen wird, mit

$$50\% \leq L_R^* \leq 100\% \text{ (Bedingung B4).}$$

2. Kochfläche (1) nach Anspruch 1, **dadurch gekennzeichnet, dass** der $TiO_2$-Anteil > 1,6 - 2,8 Gew.-% beträgt.

3. Kochfläche (1) nach wenigstens einem der vorhergehenden Ansprüche, **dadurch gekennzeichnet, dass** die Glaskeramikplatte folgende Komponenten (in Gew.-% auf Oxidbasis) enthält:

| | |
|---|---|
| $Li_2O$ | 3 - 4,5 |
| $Al_2O_3$ | 19 - 24 |
| $SiO_2$ | 62 - 70 |
| $TiO_2$ | > 1,6 - 2,8 |
| $ZrO_2$ | 1 - 2,5 |
| $Fe_2O_3$ | 0,005 - 0,025 |

4. Kochfläche (1) nach Anspruch 3, **dadurch gekennzeichnet, dass** die Glaskeramikplatte MgO mit einem Anteil von 0,1 - < 0,5 Gew.-% enthält.

5. Kochfläche (1) nach wenigstens einem der Ansprüche 3 oder 4, **dadurch gekennzeichnet, dass** die Glaskeramikplatte SrO mit einem Anteil von 0,01 - 2 Gew.- % enthält.

6. Kochfläche (1) nach einem der Ansprüche 3 bis 5, **dadurch gekennzeichnet, dass** die Glaskeramikplatte BaO mit einem Anteil von 0,1 - 4 Gew.-% enthält.

7. Kochfläche (1) nach den Ansprüchen 5 und 6, **dadurch gekennzeichnet, dass** für die Komponenten BaO und SrO die Bedingung

$$0,5 \leq SrO + BaO \leq 2,5 \text{ (Bedingung B5)}$$

gilt.

8. Kochfläche (1) nach einem der Ansprüche 3 bis 7, **dadurch gekennzeichnet, dass** die Glaskeramikplatte $As_2O_3$ mit einem Anteil von 0,1 - 2 Gew.-%, insbesondere 0,4 - 2 Gew.-% enthält.

9. Kochfläche (1) nach einem der Ansprüche 3 bis 8, **dadurch gekennzeichnet, dass** die Glaskeramikplatte $SnO_2$ mit einem Anteil von weniger als 0,1 Gew.-% enthält.

10. Kochfläche (1) nach einem der Ansprüche 3 bis 9, **dadurch gekennzeichnet, dass** die Glaskeramikplatte $Nd_2O_3$ mit einem Anteil von 0,01 Gew.-% - 0,25 Gew.-% enthält.

11. Kochfläche (1) nach einem der Ansprüche 3 bis 10, **dadurch gekennzeichnet, dass** die Glaskeramikplatte $Fe_2O_3$ mit einem Anteil von 0,005 Gew.-% bis 0,02 Gew.-% enthält.

12. Kochfläche (1) nach einem der Ansprüche 4 bis 11, **dadurch gekennzeichnet, dass** für die Komponenten MgO und $As_2O_3$ die Bedingung

$$MgO / As_2O_3 < 0,8 \text{ (Bedingung B6)}$$

mit $As_2O_3 > 0$ Gew.-% gilt.

13. Kochfläche (1) nach Anspruch 3, **dadurch gekennzeichnet, dass** die Glaskeramikplatte folgende Komponenten (in Gew.-% auf Oxidbasis) enthält:

| | |
|---|---|
| $Li_2O$ | 3,2 - 4,5 |
| $Al_2O_3$ | 19 - 24 |
| $SiO_2$ | 62 - 68 |
| $Na_2O$ | 0 - 1 |
| $K_2O$ | 0 - 1 |
| $Na_2O + K_2O$ | 0,2 - 1,5 (Bedingung B7a) |
| MgO | 0,05 - < 0,5 |
| $TiO_2$ | 1,8 - 2,8 |
| $ZrO_2$ | 1 - < 2,2 |
| $TiO_2 + ZrO_2 + SnO_2$ | 3,8 - 4,8 (Bedingung B8) |
| $Fe_2O_3$ | 0,007 - 0,02 |
| CaO | 0 - 1,5 |
| SrO | 0 - 1,5 |
| BaO | 0 - 2,5 |
| ZnO | 0 - 2,5 |
| $P_2O_5$ | 0 - 4 |

14. Kochfläche (1) nach Anspruch 3, **dadurch gekennzeichnet,** das die Glaskeramikplatte folgende Komponenten (in Gew.-% auf Oxidbasis) enthält:

| | |
|---|---|
| $Li_2O$ | 3,2 - < 4,2 |
| $Al_2O_3$ | 20 - < 23 |
| $SiO_2$ | 62 - 68 |
| $Na_2O$ | 0,1 - 1 |
| $K_2O$ | 0 - 1 |
| $Na_2O + K_2O$ | 0,2 - 1,2 (Bedingung B7b) |

(fortgesetzt)

| | |
|---|---|
| MgO | 0,1 - 0,4 |
| CaO | 0,05 - 1 |
| SrO | 0 - 1,5 |
| BaO | 0 - 2,5 |
| SrO + BaO | 0,5 - 2,5 |
| $TiO_2$ | 1,8 - 2,8 |
| $ZrO_2$ | 1 - < 2,2 |
| $SnO_2$ | 0,01 - < 0,10 |
| $TiO_2 + ZrO_2 + SnO_2$ | 3,8 - 4,8 (Bedingung B8) |
| $Fe_2O_3$ | 0,008 - 0,02 |
| ZnO | 0 - 2,5 |
| $B_2O_3$ | 0 - 1 |
| $P_2O_5$ | 0 - 2 |

**15.** Kochfläche (1) nach einem der vorhergehenden Ansprüche, **dadurch gekennzeichnet, dass** die Unterseitenbeschichtung (8) aus zwei Lagen (9a, 9b) aufgebaut ist, wobei eine erste farbgebende Lage (9a) auf der Unterseite der Glaskeramikplatte (8) aufgebracht ist und wobei eine zweite Lage (9b) auf der ersten Lage (9a) aufgebracht ist.

**Claims**

**1.** Cooking surface (1) made of a transparent lithium aluminum silicate glass ceramic plate (2) which has a top surface (4) and a bottom surface (6), wherein the bottom surface (6) is at least partially provided with a bottom coating (8), **characterized in that**

the glass ceramic includes high quartz mixed crystals as the main crystal phase,

the glass ceramic plate (2) with a thickness of 4 mm has a chromaticity $c_T^*$ of at most 3 when light of standard illuminant D65 passes through,

the glass ceramic plate has $TiO_2$ as nucleating agent,

the cooking surface (1) has a color locus A with the color coordinates $(L_R^*, a_R^*, b_R^*)$ in the CIELAB color space, which is measured in remission with light of standard illuminant D65,

the bottom coating (8) has a color locus B with the color coordinates $(L_{Rc}^*, a_{Rc}^*, b_{Rc}^*)$ in the CIELAB color space,

the color loci A and B have a distance $\Delta E_{Rc,R}^*$ with:

$$\Delta E_{Rc,R}^* = \sqrt{(L_{Rc}^* - L_R^*)^2 + (a_{Rc}^* - a_R^*)^2 + (b_{Rc}^* - b_R^*)^2}$$

and the following is applicable to the distance $\Delta E_{Rc,R}^*$ :

$$0.07 \cdot L_R^* + 1.8 \leq \Delta E_{Rc,R}^* \leq 0.09 \, L_R^* + 3.4 \text{ (condition B3)}$$

wherein the color coordinate $L_R^*$ in % denotes the brightness of the cooking surface (1), which is measured in remission with light of standard illuminant D65, with

$$50\% \le L_R^* \le 100\% \text{(condition B4)}.$$

2. Cooking surface (1) according to claim 1, **characterized in that** the $TiO_2$ proportion is > 1.6 - 2.8% in weight.

3. Cooking surface (1) according to at least one of the preceding claims, **characterized in that** the glass ceramic plate includes the following components (in % in weight on oxide basis):

| | |
|---|---|
| $Li_2O$ | 3 - 4.5 |
| $Al_2O_3$ | 19 - 24 |
| $SiO_2$ | 62 - 70 |
| $TiO_2$ | > 1.6 - 2.8 |
| $ZrO_2$ | 1 - 2.5 |
| $Fe_2O_3$ | 0.005 - 0.025 |

4. Cooking surface (1) according to claim 3, **characterized in that** the glass ceramic plate includes MgO with a proportion of 0.1 - < 0.5% in weight.

5. Cooking surface (1) according to at least one of claims 3 or 4, **characterized in that** the glass ceramic plate includes SrO with a proportion of 0.01 - 2% in weight.

6. Cooking surface (1) according to one of claims 3 to 5, **characterized in that** the glass ceramic plate includes BaO with a proportion of 0.1 - 4% in weight.

7. Cooking surface (1) according to claims 5 and 6, **characterized in that** for the components BaO and SrO the condition

$$0.5 \le SrO + BaO \le 2.5 \text{ (condition B5)}$$

is applicable.

8. Cooking surface (1) according to one of claims 3 to 7, **characterized in that** the glass ceramic plate includes $As_2O_3$ with a proportion of 0.1 - 2% in weight, in particular 0.4 - 2% in weight.

9. Cooking surface (1) according to one of claims 3 to 8, **characterized in that** the glass ceramic plate includes $SnO_2$ with a proportion of less than 0.1% in weight.

10. Cooking surface (1) according to one of claims 3 to 9, **characterized in that** the glass ceramic plate includes $Nd_2O_3$ with a proportion of 0.01% in weight - 0.25% in weight.

11. Cooking surface (1) according to one of claims 3 to 10, **characterized in that** the glass ceramic plate includes $Fe_2O_3$ with a proportion of 0.005% in weight to 0.02% in weight.

12. Cooking surface (1) according to one of claims 4 to 11, **characterized in that** for the components MgO and $As_2O_3$ the condition

$$MgO / As_2O_3 < 0.8 \text{ (condition B6)}$$

with $AS_2O_3$ > 0% in weight is applicable.

13. Cooking surface (1) according to claim 3, **characterized in that** the glass ceramic plate includes the following components (in % in weight on oxide basis):

| | |
|---|---|
| $Li_2O$ | 3.2 - 4.5 |
| $Al_2O_3$ | 19 - 24 |

(fortgesetzt)

| | |
|---|---|
| $SiO_2$ | 62 - 68 |
| $Na_2O$ | 0 - 1 |
| $K_2O$ | 0 - 1 |
| $Na_2O + K_2O$ | 0.2 - 1.5 (condition B7a) |
| MgO | 0.05 - < 0.5 |
| $TiO_2$ | 1.8 - 2.8 |
| $ZrO_2$ | 1 - < 2.2 |
| $TiO_2 + ZrO_2 + SnO_2$ | 3.8 - 4.8 (condition B8) |
| $Fe_2O_3$ | 0.007 - 0.02 |
| CaO | 0 - 1.5 |
| SrO | 0 - 1.5 |
| BaO | 0 - 2.5 |
| ZnO | 0 - 2.5 |
| $P_2O_5$ | 0 - 4. |

**14.** Cooking surface (1) according to claim 3, **characterized in that** the glass ceramic plate includes the following components (in % in weight on oxide basis):

| | |
|---|---|
| $Li_2O$ | 3.2 - < 4.2 |
| $Al_2O_3$ | 20 - < 23 |
| $SiO_2$ | 62 - 68 |
| $Na_2O$ | 0.1 - 1 |
| $K_2O$ | 0 - 1 |
| $Na_2O + K_2O$ | 0.2 - 1.2 (condition B7b) |
| MgO | 0.1 - 0.4 |
| CaO | 0.05 - 1 |
| SrO | 0 - 1.5 |
| BaO | 0 - 2.5 |
| SrO + BaO | 0.5 - 2.5 |
| $TiO_2$ | 1.8 - 2.8 |
| $ZrO_2$ | 1 - < 2.2 |
| $SnO_2$ | 0.01 - < 0.10 |
| $TiO_2 + ZrO_2 + SnO_2$ | 3.8 - 4.8 (condition B8) |
| $Fe_2O_3$ | 0.008 - 0.02 |
| ZnO | 0 - 2.5 |
| $B_2O3$ | 0 - 1 |
| $P_2O_5$ | 0 - 2. |

**15.** Cooking surface (1) according to any of the preceding claims, **characterized in that** the bottom coating (8) is made up of two layers (9a, 9b), wherein a first coloring layer (9a) is applied to the bottom of the glass ceramic plate (8) and wherein a second layer (9b) is applied to the first layer (9a).

**Revendications**

**1.** Surface de cuisson (1) constituée d'une plaque vitrocéramique transparente en aluminosilicate de lithium (2) qui présente une surface supérieure (4) et une surface inférieure (6), la surface inférieure (6) étant au moins partiellement pourvue d'un revêtement de face inférieure (8), **caractérisée en ce que**

la vitrocéramique contient des cristaux mixtes de quartz de haute qualité comme phase cristalline principale, **en ce que** la plaque vitrocéramique (2) d'une épaisseur de 4 mm présente, au passage de la lumière de l'illuminant normalisé D65, une coloration $c_T^*$ de 3 au maximum,

**en ce que** la plaque vitrocéramique présente du TiO$_2$ comme agent de nucléation,

**en ce que** la surface de cuisson (1) présente un lieu de couleur A avec les coordonnées de couleur $(L_R^*, a_R^*, b_R^*)$ dans l'espace chromatique CIELAB, qui est mesuré en rémission avec la lumière de l'illuminant standard D65,

**en ce que** le revêtement de face inférieure (8) présente un lieu de couleur B avec les coordonnées de couleur $(L_{Rc}^*, a_{Rc}^*, b_{Rc}^*)$ dans l'espace chromatique CIELAB,

**en ce que** les lieux de couleur A et B présentent une distance $\Delta E_{Rc,R}^*$ avec :

$$\Delta E_{Rc,R}^* = \sqrt{(L_{Rc}^* - L_R^*)^2 + (a_{Rc}^* - a_R^*)^2 + (b_{Rc}^* - b_R^*)^2}$$

et **en ce que** pour la distance, $\Delta E_{Rc,R}^*$ s'applique :

$$0,07 \cdot L_R^* + 1,8 \leq \Delta E_{Rc,R}^* \leq 0,09 \, L_R^* + 3,4 \quad \text{(condition B3)}$$

la coordonnée de couleur $L_R^*$ en % désignant la luminosité de la surface de cuisson (1) mesurée en rémission avec la lumière de l'illuminant standard D65, avec

$$50\% \leq L_R^* \leq 100\% \quad \text{(condition B4)}.$$

2. Surface de cuisson (1) selon la revendication 1, **caractérisée en ce que** la proportion de TiO$_2$ est > 1,6 - 2,8 % en poids.

3. Surface de cuisson (1) selon au moins l'une des revendications précédentes, **caractérisée en ce que** la plaque vitrocéramique contient les composants suivants (en % en poids sur la base des oxydes) :

| | |
|---|---|
| Li$_2$O | 3 - 4,5 |
| Al$_2$O$_3$ | 19 - 24 |
| SiO$_2$ | 62 - 70 |
| TiO$_2$ | >1,6 - 2,8 |
| ZrO$_2$ | 1 - 2,5 |
| Fe$_2$O$_3$ | 0,005 - 0,025. |

4. Surface de cuisson (1) selon la revendication 3, **caractérisée en ce que** la plaque vitrocéramique contient du MgO à raison de 0,1 à < 0,5 % en poids.

5. Surface de cuisson (1) selon au moins l'une des revendications 3 ou 4, **caractérisée en ce que** la plaque vitrocéramique contient du SrO à raison de 0,01 à 2 % en poids.

6. Surface de cuisson (1) selon l'une des revendications 3 à 5, **caractérisée en ce que** la plaque vitrocéramique contient du BaO à raison de 0,1 à 4 % en poids.

7. Surface de cuisson (1) selon les revendications 5 et 6, **caractérisée en ce que,** pour les composants BaO et SrO, la condition

$$0,5 \leq SrO + BaO \leq 2,5 \text{ (condition B5)}$$

s'applique.

**8.** Surface de cuisson (1) selon l'une des revendications 3 à 7, **caractérisée en ce que** la plaque vitrocéramique contient de l'$As_2O_3$ à raison de 0,1 à 2 % en poids, notamment 0,4 à 2 % en poids.

**9.** Surface de cuisson (1) selon l'une des revendications 3 à 8, **caractérisée en ce que** la plaque vitrocéramique contient du $SnO_2$ à raison de moins de 0,1 % en poids.

**10.** Surface de cuisson (1) selon l'une des revendications 3 à 9, **caractérisée en ce que** la plaque vitrocéramique contient du $Nd_2O_3$ à raison de 0,01 % à 0,25 % en poids.

**11.** Surface de cuisson (1) selon l'une des revendications 3 à 10, **caractérisée en ce que** la plaque vitrocéramique contient du $Fe_2O_3$ à raison de 0,005 % à 0,02 % en poids.

**12.** Surface de cuisson (1) selon l'une des revendications 4 à 11, **caractérisée en ce que,** pour les composants MgO et $As_2O_3$, la condition

$$MgO / As_2O_3 < 0,8 \text{ (condition B6)}$$

avec $AS_2O_3$ > 0 % en poids s'applique.

**13.** Surface de cuisson (1) selon la revendication 3, **caractérisée en ce que** la plaque vitrocéramique contient les composants suivants (en % en poids sur la base des oxydes) :

| | |
|---|---|
| $Li_2O$ | 3,2 - 4,5 |
| $Al_2O_3$ | 19 - 24 |
| $SiO_2$ | 62 - 68 |
| $Na_2O$ | 0 - 1 |
| $K_2O$ | 0 - 1 |
| $Na_2O + K_2O$ | 0,2 - 1,5 (condition B7a) |
| MgO | 0,05 - < 0,5 |
| $TiO_2$ | 1,8 - 2,8 |
| $ZrO_2$ | 1 - < 2,2 |
| $TiO_2 + ZrO_2 + SnO_2$ | 3,8 - 4,8 (condition B8) |
| $Fe_2O_3$ | 0,007 - 0,02 |
| CaO | 0 - 1,5 |
| SrO | 0 - 1,5 |
| BaO | 0 - 2,5 |
| ZnO | 0 - 2,5 |
| $P_2O_5$ | 0 - 4. |

**14.** Surface de cuisson (1) selon la revendication 3, **caractérisée en ce que** la plaque vitrocéramique contient les composants suivants (en % en poids sur la base des oxydes) :

| | |
|---|---|
| $Li_2O$ | 3,2 - < 4,2 |
| $Al_2O_3$ | 20 - < 23 |
| $SiO_2$ | 62 - 68 |
| $Na_2O$ | 0,1 - 1 |
| $K_2O$ | 0 - 1 |
| $Na_2O + K_2O$ | 0,2 - 1,2 (condition B7b) |
| MgO | 0,1 - 0,4 |

(fortgesetzt)

| | |
|---|---|
| CaO | 0,05 - 1 |
| SrO | 0 - 1,5 |
| BaO | 0 - 2,5 |
| SrO + BaO | 0,5 - 2,5 |
| $TiO_2$ | 1,8 - 2,8 |
| $ZrO_2$ | 1 - < 2,2 |
| $SnO_2$ | 0,01 - < 0,10 |
| $TiO_2 + ZrO_2 + SnO_2$ | 3,8 - 4,8 (condition B8) |
| $Fe_2O_3$ | 0,008 - 0,02 |
| ZnO | 0 - 2,5 |
| $B_2O_3$ | 0 - 1 |
| $P_2O_5$ | 0 - 2. |

**15.** Surface de cuisson (1) selon l'une des revendications précédentes, **caractérisée en ce que** le revêtement de la face inférieure (8) est constitué de deux couches (9a, 9b), une première couche colorante (9a) étant appliquée sur la face inférieure de la plaque vitrocéramique (8) et une deuxième couche (9b) étant appliquée sur la première couche (9a).

Figur 1

Figur 2

Figur 3

Figur 4

EP 4 026 813 B1

## $\Delta E^*_{RC,R}$ versus $L^*_R$
### für Ausführungsbeispiele mit $C^*_T$ Werten von 0,5 bis 4,2

| | |
|---|---|
| Limit1 oben | $\Delta E^*_{RC,R} = 0,09 \cdot L_R^* + 3,4$ |
| Limit1 unten | $\Delta E^*_{RC,R} = 0,07 \cdot L_R^* + 1,8$ |
| Limit2 oben | $\Delta E^*_{RC,R} = 0,09 \cdot L_R^* + 3,05$ |
| Limit2 unten | $\Delta E^*_{RC,R} = 0,07 \cdot L_R^* + 2,2$ |
| Limit3 oben | $\Delta E^*_{RC,R} = 0,09 \cdot L_R^* + 2,7$ |
| Limit3 unten | $\Delta E^*_{RC,R} = 0,07 \cdot L_R^* + 2,6$ |
| Limit4 | $L_R^* = 98$ |
| Limit5 | $L_R^* = 93$ |
| Limit6 | $L_R^* = 88$ |

Y-Achse: $\Delta E^*_{RC,R}$, auf 4 mm normiert, Normlichtart D65 von dem Remissionsspektrums (R) des Kochfelds zum Remissionsspektrum (RC) der Unterseitenbeschichtung

X-Achse: $L^*_R$ Remission des Kochfelds, auf 4 mm normiert, Normlichtart D65

Legende:
Glas-
Nr.($C_T^*$)

- ○ 15 (4.2)
- △ 12 (3.8)
- ◇ 14 (2.4)
- ● 3 (0.7)
- ▲ 10 (1.0)
- ◆ 2 (1.9)
- ■ 1 (2.1)
- ✕ 17 (1.1)
- + 18 (0.5)
- —— Limit1
- – – Limit2
- ······ Limit3
- — — Limit4
- —·— Limit5
- —··— Limit6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018225627 A
- EP 3228601 A1
- WO 2015009483 A1
- WO 2008065167 A1
- US 3252811 A
- WO 2008065166 A1
- DE 102010035544 A1
- DE 102011107831 A1
- WO 2013124373 A1
- EP 3018107 A
- DE 102016208300
- EP 1837313 A
- EP 1837314 A1
- EP 1074520 A1
- EP 1837314 A

**In der Beschreibung aufgeführte Nicht-Patentliteratur**

- **BEALL** ; **PICKNEY**. Nanophase Glass-Ceramics. *Journal of the American Ceramic Society*, 1999, vol. 82 (1), 5-16